# EUROPÄISCHE PATENTSCHRIFT

(11) **EP 2 444 656 B1**
(45) Veröffentlichungstag und Bekanntmachung des Hinweises auf die Patenterteilung: **31.10.2018**
(21) Anmeldenummer: 11007712.0
(22) Anmeldetag: 22.09.2011
(51) Int. Cl.: F03D 13/40, B63B 35/00, B65D 85/68

(54) **Sicherungselement und Transportrahmen für Elemente einer Windkraftanlage**
Securing element and transport frame for elements of a wind power assembly
Élément de sécurité et cadre de transport pour éléments d'une éolienne

(30) Priorität: 23.09.2010 DE 102010046171; 09.09.2011 DE 102011112784
(43) Veröffentlichungstag der Anmeldung: 25.04.2012
(73) Patentinhaber: Wader-Wittis GmbH, 42477 Radevormwald (DE)
(72) Erfinder: Behr, Carl Peter, 22393 Hamburg (DE)
(74) Vertreter: Klickow & Wetzel PartGmbB

(56) Entgegenhaltungen:
- EP-A2- 0 057 361
- DE-A1- 2 946 224
- DE-U1- 29 913 669
- US-A- 4 125 077
- US-A1- 2004 131 440
- US-A1- 2005 002 749

## Beschreibung

Die Erfindung betrifft ein Transport- und Sicherungssystem gemäß dem Anspruch 1.

Bedingt durch die steigende Nutzung erneuerbarer Energien wird eine Vielzahl von immer größer werdenden Windkraftanlagen errichtet. Dieses geschieht sowohl onshore als auch offshore. Anlagen mit einer Leistung von mehr als 5 MW und Nabenhöhen von über 100 m sind heutzutage möglich.

Ausschlaggebend für die wirtschaftliche Nutzung von Windenergien sind u. a. die Kosten, die bei der Errichtung der Anlage sowie bei dem Transport der einzelnen Anlagenkomponenten entstehen. Eine Vielzahl von Herstellern von Windkraftanlagen bezieht seine Komponenten teilweise aus eigener Herstellung und teilweise von Zulieferbetrieben, die weltweit angesiedelt sind. Hierbei ist ein kostengünstiger und sicherer Transport zu gewährleisten. Aufgrund der großen Anzahl von Herstellern und Zulieferbetrieben, die häufig als kleine Betriebe begonnen haben, sind individuelle Transportsysteme teilweise herstellerspezifisch entwickelt worden.

Eine Komponente des Transportproblems ist der Transport der Elemente der Windkraftanlagen auf Schiffen von einem Hafen, in dem der Hersteller der Elemente seine Produkte geliefert hat, zu einem Hafen im Errichtungsbereich der Windkraftanlage. Dieser Transport erfolgt im Wesentlichen horizontal. Dabei werden die Elemente beispielsweise an Deck für den Transport angeordnet. Auf besonders großen Spezialschiffen ist allerdings auch der vertikale Transport vorgesehen. Hierbei kann es sich ebenfalls um reine Transportfahrten vom Hersteller ausgehend handeln. Allerdings kommt dem vertikalen Transport eine weitere Bedeutung zu, da die Anzahl von offshore errichteten Windkraftanlagen steigt. Hier weist der vertikale Transport den Vorteil auf, dass die Elemente, beispielsweise wenn es sich um Turmsegmente handelt, nicht durch eine Hubvorrichtung, wie beispielsweise einen Kran, von der Horizontale in die Vertikale überführt werden müssen. Die vertikal angeordneten Turmsegmente können am Errichtungsort direkt aus dem Bauch des Schiffes entnommen und ohne Lageänderung direkt montiert werden.

Bisher werden die Systeme, mit denen die Komponenten transportiert werden, auf das jeweilige Projekt maßgeschneidert, siehe z.B. US2005/0002749. Dieses hat den Nachteil, dass mit jedem neuen Projekt hohe Entwicklungskosten und unter Umständen lang andauernde Genehmigungsverfahren bei den Zertifizierern anfallen, um ein passendes Transportsystem bereitzustellen. Auch ist es notwendig für jede Systemkomponente wie Turmabschnitte, Gondel, Verankerungselemente im Grund wie Tripods oder Gittermasten mit einem eigenen Transportsystem zu versehen, da diese unterschiedliche Anforderungen wegen Größe, Gewicht etc. an das Transportsystem stellen.

Aufgabe der Erfindung ist es, eine Sicherungsvorrichtung, ein Transportrahmen und ein Transportsystem geeignet für den Transport einer schweren Last, insbesondere einer Komponente einer Windkraftanlage, wie beispielsweise Turmsegmenten, auf einer Transportoberfläche eines Transportfahrzeugs, insbesondere eines Schiffs, bereitzustellen, mit denen es bei unterschiedlichen schweren Lasten, insbesondere mit unterschiedlichen Dimensionen, möglich ist, diese mit denselben Komponenten sicher zu transportieren und gleichzeitig ein schnelles Be- und Entladen der Lasten von dem Transportfahrzeug im Hafen oder beispielsweise am Errichtungsort einer Windkraftanlage zu ermöglichen. Ein weiter Teilaspekt der Aufgabe ist darüberhinaus, dass optional Zusätzlich ist der Aspekt relevant, dass ggf. sowohl ein vertikaler als auch ein horizontaler Transport möglich ist, ohne dass in einem Zwischenschritt das System gewechselt werden muss.

Des Weiteren sind die Türme von Windkraftanlagen als konisch zulaufende Körper ausgeführt, deren Durchmesser mit der Höhe des Turms der Windkraftanlage abnimmt. Aus diesem Grund ist es notwendig, eine Sicherungsvorrichtung zu schaffen, die den unterschiedlichen Durchmessern der Windkraftanlage Rechnung trägt. Des Weiteren soll diese Sicherungsvorrichtung insbesondere Bestandteil des Transport- und Sicherungssystems sein.

Hinsichtlich des Sicherungselements sieht die erfindungsgemäße Lösung ein Sicherungselement, geeignet für das Sichern einer schweren Last, insbesondere einer Komponente einer Windkraftanlage, auf einem Transportrahmen oder Transportrahmenabschnitt, mit wenigstens einem Bolzenelement, das mit dem Transportrahmen oder Transportrahmenabschnitt in Wirkverbindung steht, mit wenigstens einem Arretierelement, das auf dem Bolzenelement anordbar oder angeordnet ist, wobei das Arretierelement einen ersten Auflageabschnitt, das im montierten Zustand in Wirkverbindung mit dem Transportrahmen oder Transportrahmenabschnittsteht, und einen zweiten Auflageabschnitt das im montierten Zustand in Wirkverbindung mit einem Abschnitt der Last steht, aufweist, wobei über das Arretierelement über die Auflageabschnitte eine die Last auf dem Transportrahmen oder Transportrahmenabschnitthaltende Kraft übertragbar ist.

Auf diese Weise wird es einfach und universell möglich, die verschiedenen Komponenten der Windkraftanlage auf einem Transportrahmen oder auf einer Transportoberfläche anzuordnen und die Komponenten schnell zu befestigen und zu lösen. Weiterhin ist ein solches Sicherungselement einfach herzustellen und ermöglicht eine sichere Verbindung zwischen Trägerelement und Windkraftanlagenelement. Des Weiteren kann auf einfache Weise durch das Aufheben der Arretierkraft ein schnelles Lösen des Elements der Windkraftanlage vom Trägerelement herbeigeführt werden.

Eine vorteilhafte Lehre der Erfindung sieht vor, dass es sich bei dem Transportelement um einen Transportrahmen oder einen Transportrahmenabschnitt handelt, und/oder dass die Wirkverbindung des Bolzenelements mit dem Transportrahmen oder Transportrahmenabschnittüber eine Öffnung im Transportrahmen oder Transportrahmenabschnittherstellbar ist, in die das Bolzenelement einsteckbar ist, erfolgt, oder dass das Bolzenelement am Transportrahmen oder Transportrahmenabschnittangeordnet ist, und/oder dass das Widerlager ein Abschnitt des Transportrahmens oder Transportrahmenabschnittsist.

Eine weitere Lehre der Erfindung sieht vor, dass zwischen Auflageabschnitt und Transportelement ein Widerlager vorgesehen ist, bei dem es sich bevorzugt um einen Abschnitt des Trägerelements handelt, oder das auf dem Trägerelement anordbar ist, und/oder dass über das Arretierelement im Wesentlichen vertikale Lasten oder Momente von der Last in das Transportelement eingeleitet werden.

Eine weitere Lehre der Erfindung sieht vor, dass das Bolzenelement einen Gewindeabschnitt zur Aufnahme eines Konterelements, bevorzugt einer Mutter, und/oder ein Widerlager für das Arretierelement, bevorzugt ein Bolzenkopf, aufweist, und/oder dass die Arretierkraft durch das Bolzenelement erzeugbar ist, indem bevorzugt das Konterelement auf dem Gewindeabschnitt gegen das Trägerelement oder Widerlager verspannbar ist. Des Weiteren ist es vorteilhaft, wenn das Arretierelement gegenüber dem Bolzenelement drehbar ist. Eine weitere Lehre der Erfindung sieht vor, dass ein Distanzstück zum Aufbringen auf einen Auflageabschnitt vorgesehen ist, bevorzugt aufsteckbar oder aufschiebbar als Schwalbenschwanzverbindung.

Durch das Vorsehen des Gewindeabschnitts auf dem Bolzenelement in Verbindung mit dem Konterelement und dem Widerlager ist es in Verbindung mit dem Arretierelement auf einfache Weise möglich, die Arretierkraft zu erzeugen. Die Drehbarkeit des Arretierelements gegenüber dem Bolzenelement ermöglicht eine einfache Herstellung der einzelnen Komponenten des Sicherungselementes. Des Weiteren ermöglicht die Drehbarkeit des Arretierelements in Bezug auf das Bolzenelement eine sichere und einfache Arretierbarkeit und Lösbarkeit in Bezug auf die Last bzw. das Element der Windkraftanlage. Durch das Vorsehen der Distanzstücke ist es möglich, in Bezug auf unterschiedlich starke Verbindungsabschnitte des Elements der Windkraftanlage eine hinreichend sichere Haltekraft zu erzeugen.

Eine weitere Lehre der Erfindung sieht vor, dass das Sicherungselement einen Arretierkörper aufweist, der in Wirkverbindung mit dem Widerlager und der Last steht, wobei der Arretierkörper bevorzugt in das Widerlager einsetzbar ist, und/oder dass das Widerlager eine Öffnung aufweist, in die ein Arretiermittel, bevorzugt ein Gewindebolzen, einbringbar ist, der gegen eine Seitenwand des Arretierkörpers und/oder in eine Öffnung in der Seitenwand des Arretierkörpers bewegbar ist, so dass die Wirkverbindung herstellbar ist.

Über den Arretierkörper ist es durch dessen Wirkverbindung mit Last und Widerlager einfach möglich, im Wesentlichen horizontale Lasten von der Last auf das Transportelement zu übertragen. Über das Arretiermittel wird eine Abstandstanddifferenz in horizontaler Richtung ausgleichbar.

Eine weitere Lehre der Erfindung sieht vor, dass das Sicherungselement einen Führungselement aufweist, über das gewährleistet ist, dass die Last an der dafür vorgesehenen Stelle auf dem Transportelement anordbar ist, wobei bevorzugt das Führungselement Bestandteil des Arretierkörpers ist. Durch die Kombination der Elemente kann einfach eine korrekte Positionierung gewährleistet werden, ohne einen zusätzlichen Einweiser vorzusehen.

Eine weitere Lehre der Erfindung sieht vor, dass das Arretierelement einen Sicherungskörper und ein Widerlagerelement aufweist, wobei der Sicherungskörper bevorzugt ein Verbindungselement zum Herstellen einer Verbindung mit der Last aufweist, und/oder ein Passstück aufweist, wobei das Passstück und/oder das Verbindungselement besonders bevorzugt gegenüber dem Sicherungskörper bewegbar angeordnet sind. Durch das Bereitstellen verschiedener Verbindungsstücke kann die Sicherungsvorrichtung besonders einfach an verschieden Komponenten angepasst werden, wobei lediglich je nach Komponente das Verbindungsstück gewechselt werden braucht. Über ein Passstück lässt sich besonders einfach eine sichere horizontal wirksame Verbindung durch Längenausgleich bereitstellen.

Eine weitere Lehre der Erfindung sieht vor, dass das Sicherungselement ein Verriegelungselement aufweist, und dass das Verriegelungselement geeignet ist, in einen Aufnahmeabschnitt des Transportelements einzugreifen und in Verbindung mit diesem eine haltende Verbindung herzustellen, wobei bevorzugt das Bolzenelement in das Verriegelungselement einsteckbar ist oder das Bolzenelement am Verriegelungselement angeordnet ist. Eine weitere Lehre der Erfindung sieht vor, dass das Verriegelungselement einen Führungsabschnitt, und/oder einen Halteabschnitt aufweist, auf dem ein Halteelement, bevorzugt in Form von wenigstens einem Vorsprung angeordnet ist. Hierdurch lässt sich eine entsprechende formschlüssige Verbindung bereitstellen. Auf diese Weise wird es möglich innerhalb eine Bereiches das Sicherungselement an unterschiedlichen Positionen auf dem Transportelement anzuordnen. Vorteilhafterweise ist das Konterelement Bestandteil des Verriegelungselements oder des Widerlagerelements beispielsweise in Form eines Eingriffsabschnitts für den Gewindeabschnitt des Bolzenelements.

Eine weitere Lehre der Erfindung sieht vor, dass das Widerlagerelement gegen einen Abschnitt des Sicherungskörpers wirkend angeordnet ist und/oder das Verriegelungselement gegenüberliegend zum Widerlagerelement gegen einen weiteren Abschnitt des Sicherungskörpers wirkend angeordnet ist, wobei die Arretierkraft bevorzugt durch Zusammenpressen von Widerlagerelement und Verriegelungselement in Richtung des Sicherungskörpers ausübbar ist. Auf diese Weise ist besonders einfach möglich, vertikale Kräfte, die auf die Last wirken in den Transportrahmen oder die Transportoberfläche zu übertragen. Auch ist es möglich, durch Bereitstellung unterschiedlich dimensionierter Widerlager und/oder Verriegelungselemente eine Anpassung an die Last vorzunehmen.

Eine weitere Lehre der Erfindung sieht vor, dass der Sicherungskörper gegenüber dem Widerlagerelement und/oder dem Verriegelungselement im nicht arretierten Zustand verdrehbar oder verschiebbar ist, und/oder dass der Sicherungskörper eine Durchstecköffnung für einen Einsetzabschnitt des Widerlagerelements oder des Verriegelungselements und/oder für das Bolzenelement aufweist, wobei bevorzugt ein Einsetzabschnitt des Widerlagerelements oder des Verriegelungselements und die Durchstecköffnung so korrespondierend ausgeführt sind, dass eine auf die Last wirkende horizontale Kraft von dem Sicherungselement in das Transportelement oder die übertragbar ist und/oder die Durchstecköffnung einen Halteabschnitt, besonders bevorzugt in Form wenigstens eines Vorsprungs, und das Widerlagerelement oder das Verriegelungselement einen korrespondierenden Halteabschnitt, besonders bevorzugt in Form wenigstens eines Vorsprungs, aufweisen, wobei die Halteabschnitte so ausgeführt sind, dass eine formschlüssige Verbindung herstellbar ist. Dadurch können beispielsweise unterschiedliche Durchmesser der Komponenten bei der Sicherung ausgeglichen werden und gleichzeitig eine adäquate Aufnahme der horizontal auf die Last wirkenden Kräfte gewährleistet werden.

Des Weiteren sieht die erfindungsgemäße Lösung einen Transportrahmen, geeignet für den Transport einer schweren Last, insbesondere einer Komponente einer Windkraftanlage, auf einer Transportoberfläche eines Transportfahrzeugs, insbesondere eines Schiffs, mit wenigstens einem Transportrahmenabschnitt, mit einem an dem Transportrahmenabschnitt angeordneten Aufnahmeabschnitt zur Aufnahme eines zuvor beschriebenen Sicherungselements, zum Sichern der Last auf dem Transportrahmenabschnitt, und mit wenigstens einer Befestigungsmittelaufnahme zur Aufnahme eines Befestigungsmittels zum Sichern des Transportrahmenabschnitts auf einer Transportoberfläche. Durch das Sicherungselement kann ein schnelles und sicheres Lösen und Arretieren der Elemente der Windkraftanlage auf dem Transportrahmen erfolgen.

Vorteilhaft ist weiterhin, dass der Aufnahmeabschnitt sich in wenigstens abschnittsweise entlang einer Seitenwand des Transportrahmenabschnitts erstreckt und ein Halteelement aufweist, dass geeignet ist, eine haltende Verbindung mit dem Sicherungselement bereitzustellen, wobei bevorzugt der Aufnahmeabschnitt schlitzartig ausgeführt ist, in der Oberseite des Transportrahmenabschnitts angeordnet ist, sich über einen wesentlichen Teil des Transportrahmenabschnitts erstreckt und/oder das Halteelement wenigstens ein Vorsprung ist, über den eine formschlüssige haltende Verbindung mit der Sicherungsvorrichtung herstellbar ist, und/oder dass ein Kontaktabschnitt vorgesehen ist, über den ein vertikal haltende Verbindung zwischen Transportrahmenabschnitt und Sicherungselement bereitstellbar ist. Durch diese Ausgestaltungsmöglichkeiten des Aufnahmeabschnitts wird es besonders einfach, eine Sicherungsvorrichtung an dem Transportrahmenabschnitt in Abhängigkeit der jeweiligen Dimension der Last anzuordnen.

Eine weitere Lehre der Erfindung sieht vor, dass der Transportrahmen mit einem Außenrahmen und Innentraversen, die bevorzugt im Wesentlichen rechtwinklig in Bezug auf den Außenrahmen innerhalb des Außenrahmens angeordnet sind, wobei Innentraversen Öffnungen zur Aufnahme des Sicherungselements aufweisen, und/oder dass wenigstens zwei Transportrahmenabschnitte vorgesehen sind, bevorzugt parallel zueinander angeordnet, die jeweils wenigstens einen Aufnahmeabschnitt aufweisen und die über ein Verbindungsmittel verbindbar sind, wobei bevorzugt auf einer Seite des Transportrahmenabschnitts eine Aufnahme für das Verbindungsmittel vorgesehen ist und/oder es sich bei dem Verbindungsmittel um eine Spannschlossstange handelt. Hierdurch wird die Anpassbarkeit an die Last zusätzlich verbessert.

Eine weitere Lehre der Erfindung sieht vor, dass auf der Innentraverse mehrere Öffnungen zur Aufnahme eines Sicherungselements vorgesehen sind, die bevorzugt hintereinander oder als ein länglicher Schlitz ausgeführt sind. Auf diese Weise ist es einfach möglich, den Transportrahmen für Elemente mit unterschiedlichen Durchmessern zu verwenden.

Eine weitere Lehre der Erfindung sieht vor, dass es sich bei den Öffnungen für das Einbringen von Verbindungselementen um Isosockets für Twistlocks handelt, und/oder dass die Öffnungen an der Unterseite des Transportrahmens, und/oder die Öffnungen auf der Seitenfläche des Rahmenelements des Außenrahmens auf einem Tragelement vorgesehen sind, das mit der Seitenfläche des Rahmenelements verbunden ist, und/oder dass Öffnungen an der Unterseite des Transportrahmens auf einer Innentraverse angeordnet sind, bei der es sich bevorzugt um eine weitere Innentraverse handelt, und/oder dass Öffnungen an den Ecken vorgesehen sind. Das Vorsehen von Isosockets für Twistlocks ermöglicht einen standardisierten Einsatz des Transportrahmens in Bezug auf Standardlaschsysteme auf Schiffen. Das Vorsehen der Öffnungen sowohl in horizontaler als auch in vertikaler Richtung auf einem Tragelement ermöglicht einen sicheren Einsatz des Transportrahmens sowohl in horizontaler als auch in vertikaler Richtung, da die Transportelemente speziell auf das Einleiten und Ableiten von Kräften über die Verbindungselemente auslegbar sind. Des Weiteren kann eine optimale Auslegung der Geometrie des Rahmens in Bezug auf die Tragelemente vorgesehen werden. Das Vorsehen einer weiteren Innentraverse, die bevorzugt parallel zu dem Rahmenelement des Außenrahmens angeordnet ist, an dem die Öffnungen in der Seitenfläche vorgesehen sind, ermöglicht ebenfalls eine optimale geometrische Auslegung des Transportrahmens auf die zu übertragenden Kräfte. Des Weiteren ist das Vorsehen von Öffnungen an den Ecken insbesondere dann vorteilhaft, wenn es sich bei diesen Öffnungen um verstärkte Isosockets handelt, die größere Lasten übertragen können.

Eine weitere Lehre der Erfindung sieht vor, dass auf dem Transportrahmen Führungselemente zur Aufnahme eines korrespondierenden Führungsabschnitts an einem Element der Windkraftanlage vorgesehen sind. Bei den Führungselementen handelt es sich bevorzugt um Stifte mit einem konischen Abschnitt oder Öffnungen zur Aufnahme solcher Stifte. Sie sind beispielsweise an Flanschelementen vorgesehen, die mit den Elementen der Windkraftanlage in Verbindung sind, oder auf eine andere Art und Weise am Element der Windkraftanlage angeordnet. Sie ermöglichen ein einfaches, sicheres und genaues Anordnen des Elements der Windkraftanlage in Bezug auf den Transportrahmen. Gleichzeitig bewirken sie eine vorläufig sichernde Wirkung, bis die Sicherungselemente in Position gebracht und arretiert sind.

Eine weitere Lehre der Erfindung sieht vor, dass wenigstens ein Anschlagelement für das Anschlagen von Hubgeschirr einer Hubvorrichtung an einem Rahmenelement des Außenrahmens vorgesehen sind, bevorzugt an dessen Seitenfläche, wobei bevorzugt das Rahmenelement mit dem Anschlagelement dem Rahmenelement mit den Öffnungen zur Aufnahme des Verbindungselements gegenüber liegt. Auf diese Weise ist ein einfaches und sicheres Anheben des Transportrahmens möglich.

Weiterhin wird die erfindungsgemäße Aufgabe gelöst durch ein Transportsystem geeignet für den Transport einer schweren Last insbesondere einer Komponente einer Windkraftanlage, auf einer Transportoberfläche eines Transportfahrzeug, insbesondere eines Schiffs, mit einem zuvor beschriebenen Transportrahmen und einem zuvor beschriebenen Sicherungselement zum Sichern der Last auf dem Transportrahmen, wobei bevorzugt das Halteelement des Transportrahmenabschnitts und das Halteelement des Verriegelungselements des Sicherungselements so ausgeführt sind, dass eine haltende Verbindung zwischen Transportrahmenabschnitt und Sicherungsvorrichtung herstellbar ist, die geeignet ist, auf die Last wirkende horizontale und/oder vertikale Kräfte und Momente auf die Transportoberfläche zu übertragen.

Nachfolgend wird die Erfindung an Hand eines Ausführungsbeispiels in Verbindung mit einer Zeichnung näher erläuter. Dabei zeigen:
- Fig. 1: eine Seitenansicht eines ersten erfindungsgemäßen Sicherungselements,
- Fig. 2: eine Seitenansicht eines ersten erfindungsgemäßen Sicherungselements,
- Fig. 3: eine Explosionsansicht zu Fig. 2,
- Fig. 4: eine Seitenansicht eines erfindungsgemäßen Arretierelements mit verschiedenen Distanzstücken,
- Fig. 5: eine Seitenansicht eines Abschnitts eines erfindungsgemäßen Transportrahmens,
- Fig. 6: eine weitere Ausführungsform zu Fig. 1,
- Fig. 7: eine Seitenansicht zu Fig. 6 mit einem ersten Distanzstück,
- Fig. 8: eine Seitenansicht zu Fig. 6 mit einem zweiten Distanzstück,
- Fig. 9: eine räumliche Anordnung eines ersten erfindungsgemäßen Sicherungselements in einer ersten Position,
- Fig. 10: eine räumliche Ansicht eines ersten erfindungsgemäßen Sicherungselements in einer alternativen Position,
- Fig. 11: eine räumliche Ansicht eines horizontalen Transports auf einem Schiff,
- Fig. 12: eine räumliche Ansicht eines horizontalen Transports eines Turmsegments,
- Fig. 13: eine erste Detailansicht zu Fig. 12,
- Fig. 14: eine Explosionsansicht zu Fig. 13,
- Fig. 15: eine zweite Detailansicht zu Fig. 12,
- Fig. 16: eine alternative Ansicht zu Fig. 15,
- Fig. 17: eine räumliche Ansicht eines vertikal angeordneten erfindungsgemäßen Transportrahmens,
- Fig. 18: eine Seitenansicht zu Fig. 12,
- Fig. 19 - 21: Verfahrensschritte des Anhebens eines Turmsegments aus einer horizontalen in eine vertikale Position,
- Fig. 22: eine alternative Darstellung zu Fig. 12,
- Fig. 23: eine räumliche Ansicht eines vertikalen Transports von Elementen einer Windkraftanlage auf einem Schiff,
- Fig. 24: eine räumliche Ansicht eines ersten erfindungsgemäßen Transportrahmens in horizontaler Ausrichtung für einen Vertikaltransport,
- Fig. 25: eine um 180° gedrehte Ansicht zu Fig. 24,
- Fig. 26: eine Ansicht zu Fig. 24 mit angeordnetem Element der Windkraftanlage,
- Fig. 27: eine alternative Ansicht zu Fig. 26 mit Elementen einer Windkraftanlage mit unterschiedlichen Radien,
- Fig. 28: eine räumliche Ansicht eines Transportrahmens und eines Elements einer Windkraftanlage vor dem Anordnen des Elements auf dem Transportrahmen,
- Fig. 29: eine räumliche Darstellung zweier vertikal angeordneter Elemente einer Windkraftanlage im Bauch eines Schiffes,
- Fig. 30: eine Detailansicht zu Fig. 29,
- Fig. 31: eine räumliche Darstellung einer alternativen Befestigungsmöglichkeit eines erfindungsgemäßen Transportrahmens in horizontaler Stellung für den Vertikaltransport,
- Fig. 32: eine räumliche Anordnung eines Transportrahmens für ein vormontiertes Rotorelement einer Windkraftanlage,
- Fig. 33: eine räumliche Ansicht eines erfindungsgemäßen Transportrahmens für ein Rotorelement,
- Fig. 34: eine Detailansicht zu Fig. 32
- Fig. 35: eine räumliche Seitenansicht eines zweiten erfindungsgemäßen Sicherungselements mit einer zweiten Ausführungsform eines erfindungsgemäßen Transportrahmens,
- Fig. 36: eine Explosionsansicht zu Fig. 35,
- Fig. 37: eine räumliche Gesamtdarstellung zu fig. 35,
- Fig. 38: eine Draufsicht zu Fig. 37,
- Fig. 39: eine räumliche Ansicht einer zu transportierenden Last auf einer Transportoberfläche, angeordnet mit einer weiteren Ausführungsform eines erfindungsgemäßen Transportsystem,
- Fig. 40: eine dritte Ausführungsform eines erfindungsgemäßen Sicherungselements in räumlicher Explosionsdarstellung,
- Fig. 41: eine Darstellung einer weiteren Ausführungsform eines erfindungsgemäßen Sicherungselements in räumlicher Explosionsdarstellung,
- Fig. 42: eine räumliche Darstellung eines erfindungsgemäßen Sicherungselements zu Fig. 3,
- Fig. 43: eine räumliche Darstellung eines erfindungsgemäßen Transportrahmensystems,
- Fig. 44: eine räumliche Darstellung eines ersten Verfahrensschrittes zum Einsetzen eines Bestandteils des erfindungsgemäßen Sicherungselements zu Fig.40, Fig. 41,
- Fig. 45: ein zweiter Verfahrensschritt zu Fig. 44,
- Fig. 46: ein dritter Verfahrensschritt zu Fig. 44,
- Fig. 47: eine Schnittansicht zu Fig. 46,
- Fig. 48: eine räumliche Darstellung einer anzuordnenden Last auf einem erfindungsgemäßen Transportrahmensystem,
- Fig. 49: eine vergrößerte Ansicht zu Fig. 48,
- Fig. 50: eine vergrößerte Ansicht zu Fig. 48 im installierten Zustand, und
- Fig. 51: eine Schnittansicht zu Fig. 50.

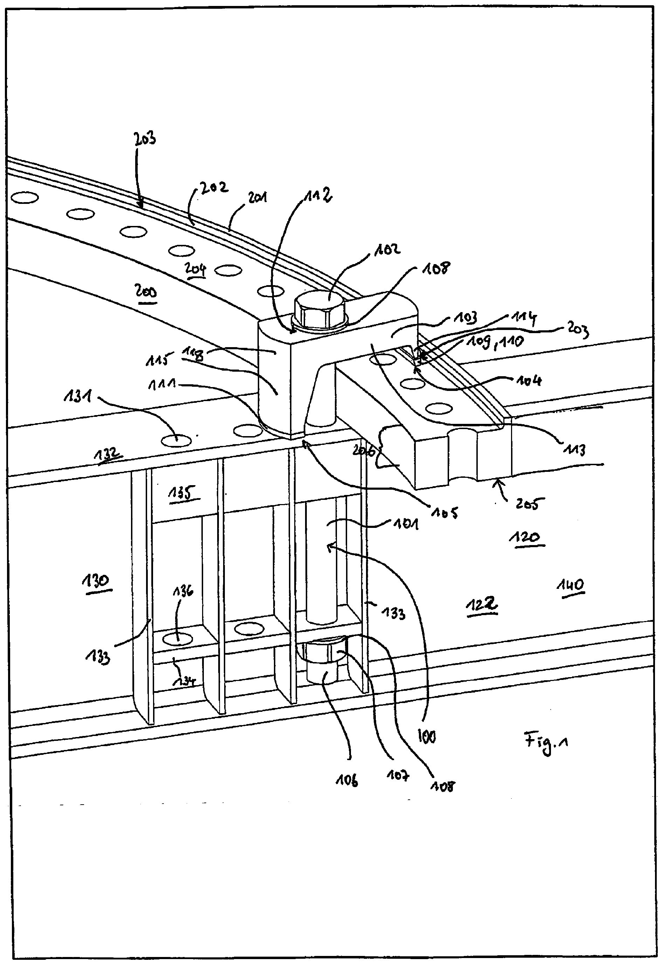

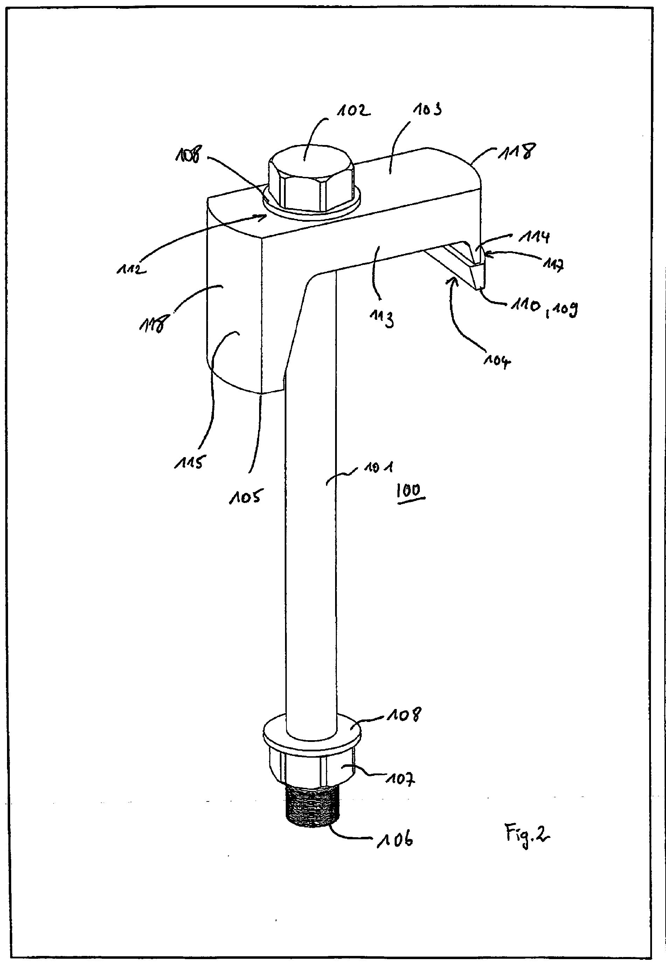

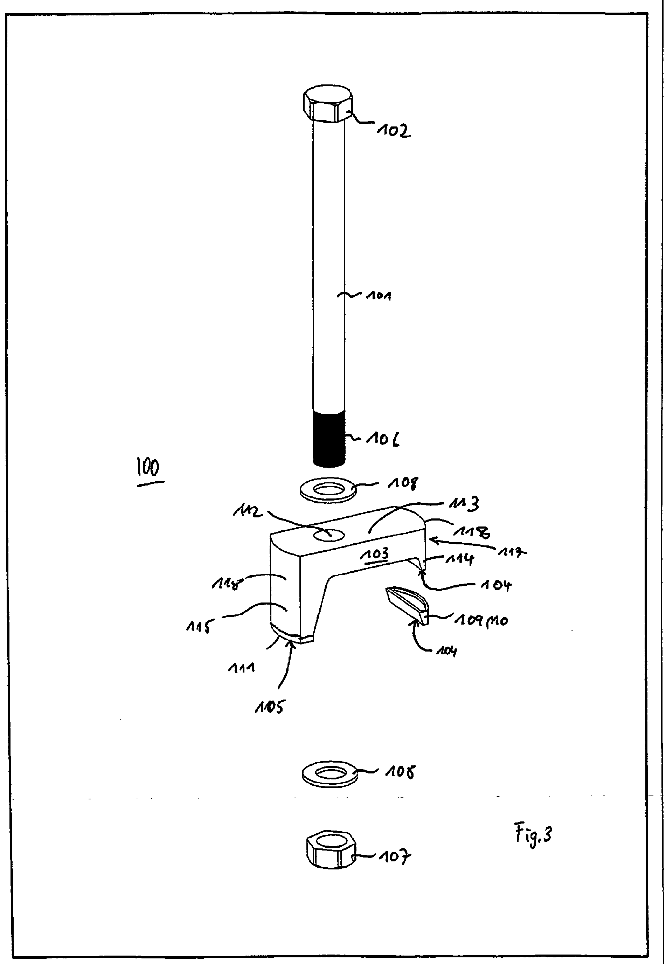

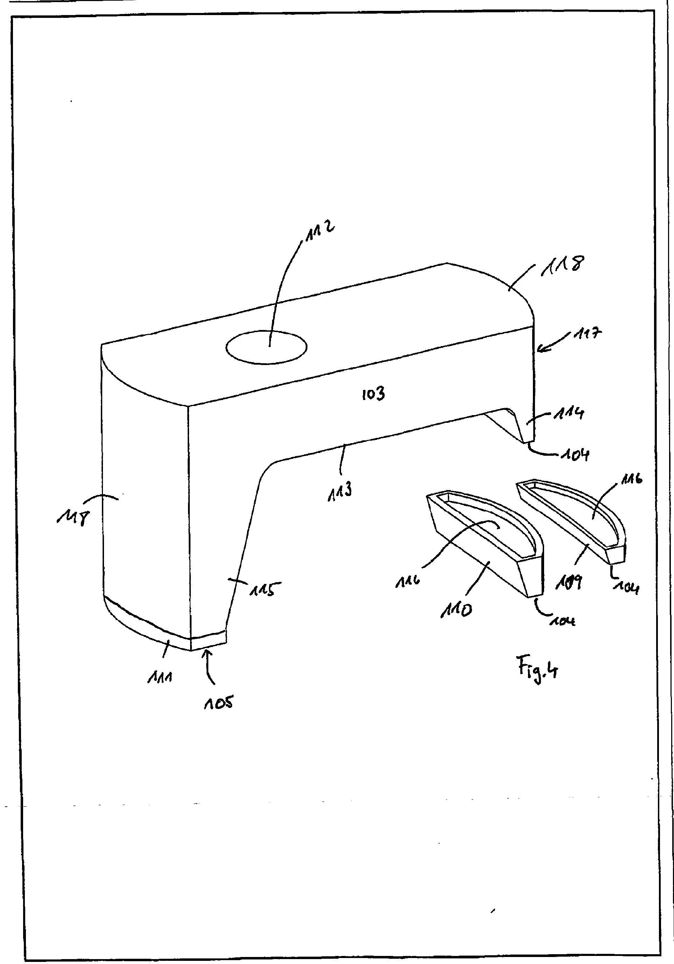

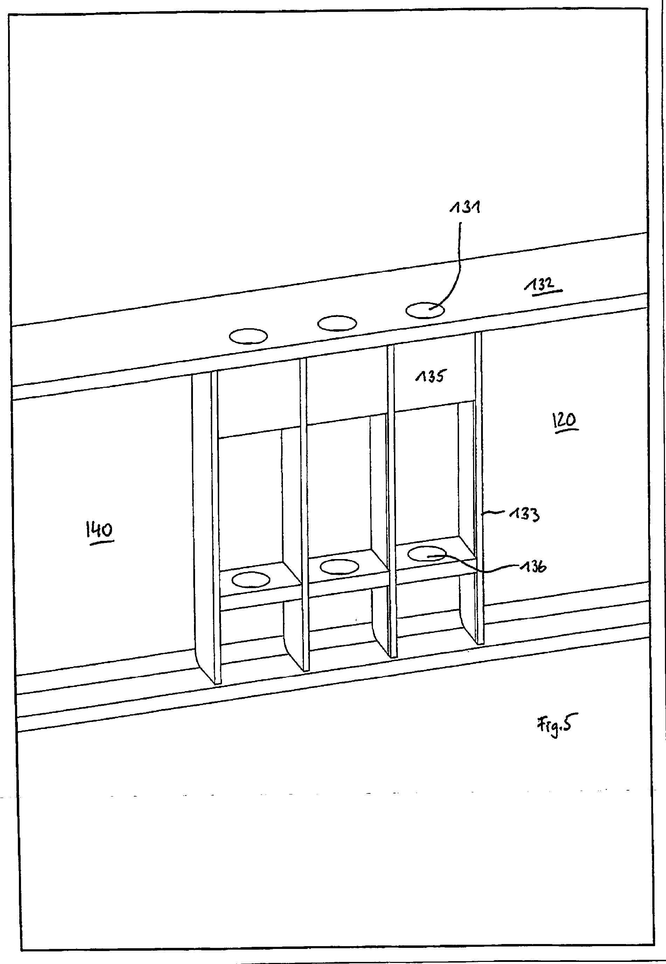

Fig. 1 bis 5 zeigen eine erste Ausführungsform eines erfindungsgemäßen Sicherungselements 100 in Verbindung mit einem Transportrahmen 120 und einem Flansch 200 als Verbindungsabschnitt eines Elements einer Windkraftanlage.

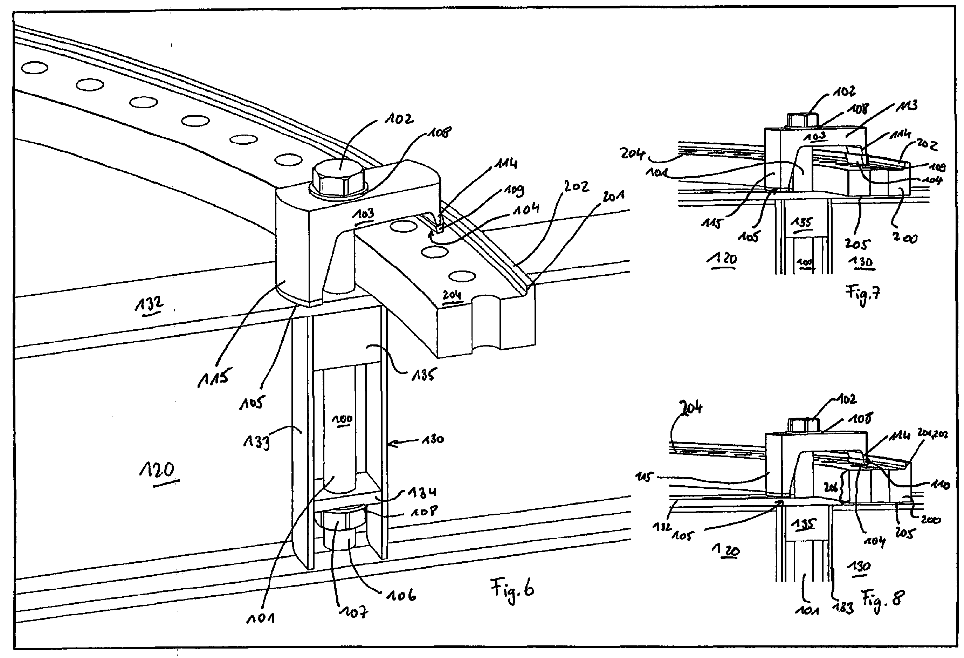

Eine alternative Ausführungsform eines Sicherungselements 100 ist in Fig. 6 bis Fig. 8 dargestellt.

Das Sicherungselement 100 besteht aus einem Bolzen 101, an dessen einem Ende ein Bolzenkopf 102 und an dessen anderem Ende ein Gewindeabschnitt 106 vorgesehen ist. Weiterer Bestandteil des Sicherungselements 100 ist ein Arretierelement 103, das eine Bohrung 112 aufweist, durch die der Bolzen 101 gesteckt ist. Das Arretierelement 103 weist einen Ausleger 113 auf, an dessen einem Ende ein Vorsprung 114 und an dessen anderem Ende ein längerer Vorsprung 115 vorgesehen ist. Am Ende des Vorsprungs 114, 115 ist ein Auflageabschnitt 104, 105 vorgesehen. Am kürzeren Vorsprung 114 ist ein Distanzstück 109, 110 vorgesehen, das eine Vertiefung 116 aufweist, der mit dem jeweiligen Auflageabschnitt 104, 105 übereinstimmt. Am Ende des Vorsprungs 115 ist ein Pufferelement 111 vorgesehen. Alternativ kann hier ebenfalls ein Distanzstück angeordnet werden. In einer weiteren Alternative ist weder ein Distanzstück 109, 110, noch ein Puffer 111 vorgesehen, so dass der Vorsprung 115 selber an seinem Ende den Auflageabschnitt 105 bildet.

Die jeweilige Außenseite 118 des Vorsprungs 114, 115 ist gewölbt ausgeführt. Im montierten Zustand, wie in Fig. 1 dargestellt ist, bildet die Außenseite 118 bzw. der korrespondierende Abschnitt des Distanzstückes ein Widerlagerabschnitt 117. Wenn das Element der Windkraftanlage auf dem Transportrahmen 120 angeordnet ist, befindet sich die Unterseite 205 des Flansches 200 in Verbindung mit der Oberfläche 132 des Transportrahmens 120. An der Oberseite 204 des Flansches 200 befindet sich ein erhöhter Abschnitt 202, der ein Widerlager 203 bildet. Das Widerlager 203 und das Widerlagerabschnitt 117 sichern den Flansch 200 gegen ein Verrutschen auf dem Transportrahmen 120.

Zur Montage des Sicherungselements 100 in Verbindung mit dem Transportrahmen 120 weist der Transportrahmen 120 einen Arretierbereich 130 auf. In der Oberfläche 132 sind im Arretierbereich 130 mehrere Bohrungen 131 vorgesehen. Unterhalb der Bohrung 131 befindet sich ein Verstärkungselement 135, durch das die Bohrung 131 ebenfalls hindurchgeht. Das Verstärkungselement 135 ist seitlich durch Lastaufnahmen 130 vorgesehen, die mit der Innenwand 140 des Transportrahmens 120 verbunden sind. Die Arretierbereiche 130 sind an Innentraversen 122 vorgesehen, die rechtwinklig mit einem Außenrahmen 121 des Transportrahmens 120 verbunden sind. Unterhalb des Verstärkungselements 135 ist ein Widerlager 134 vorgesehen, das eine Bohrung 136 aufweist. Zur Montage des Sicherungselements 100 in Verbindung mit dem Transportrahmen 120 wird das Arretierelement 103 auf den Bolzen 101 aufgesteckt. Zwischen Arretierelement 103 und Bolzenkopf 102 befindet sich eine Unterlegscheibe 108. Der Bolzen 101 wird durch die Öffnung 131 gesteckt und nach unten geführt, bis er ebenfalls durch die Öffnung 136 des Widerlagers 134 hindurchtritt. Anschließend wird eine Unterlegscheibe 108 auf den Bolzen aufgesteckt und auf den Gewindeabschnitt 106 des Bolzens wird eine Mutter 107 aufgeschraubt.

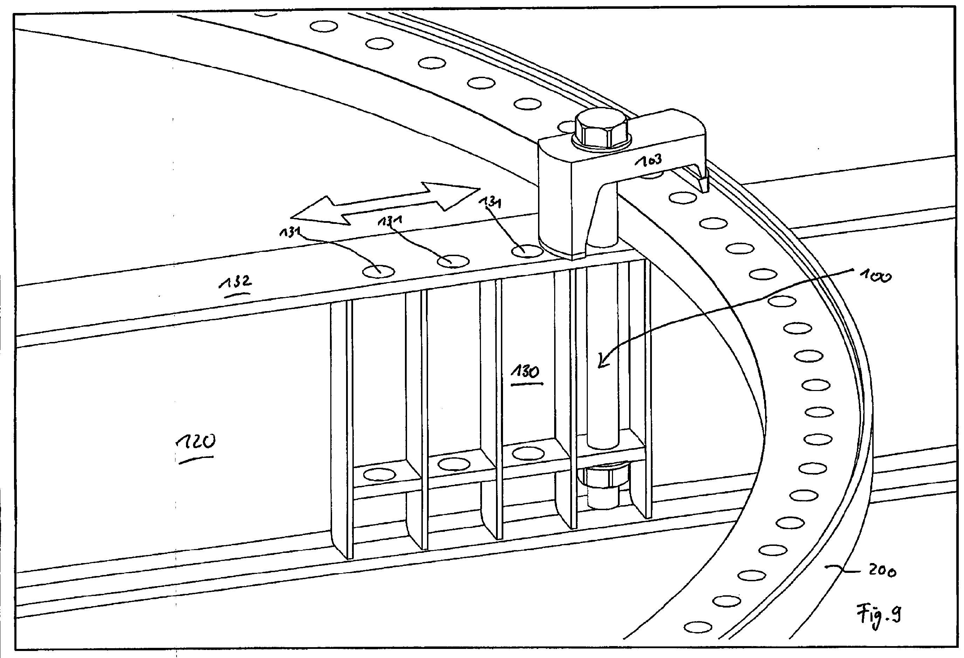

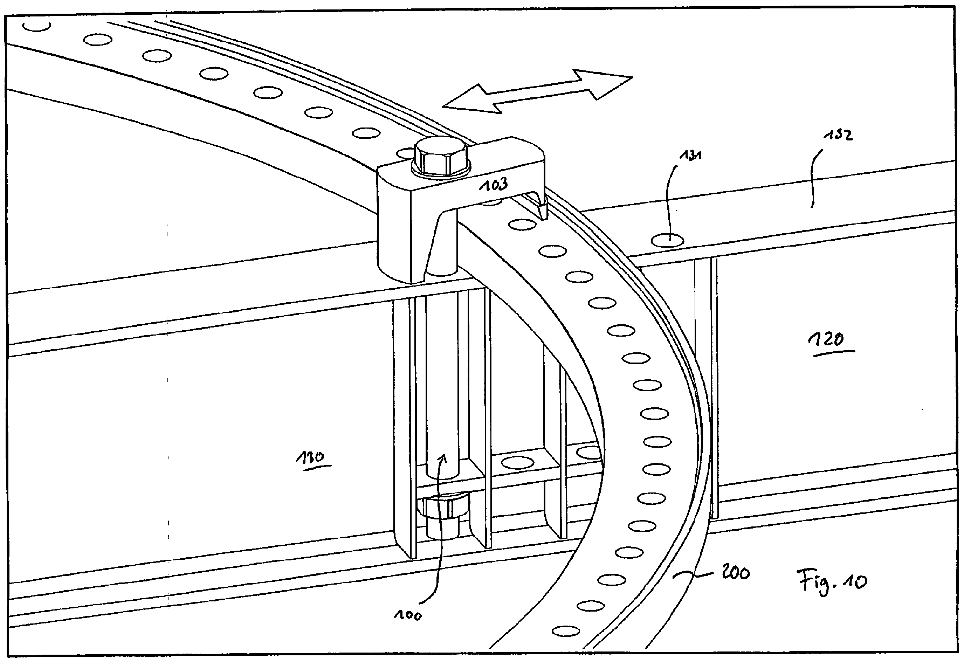

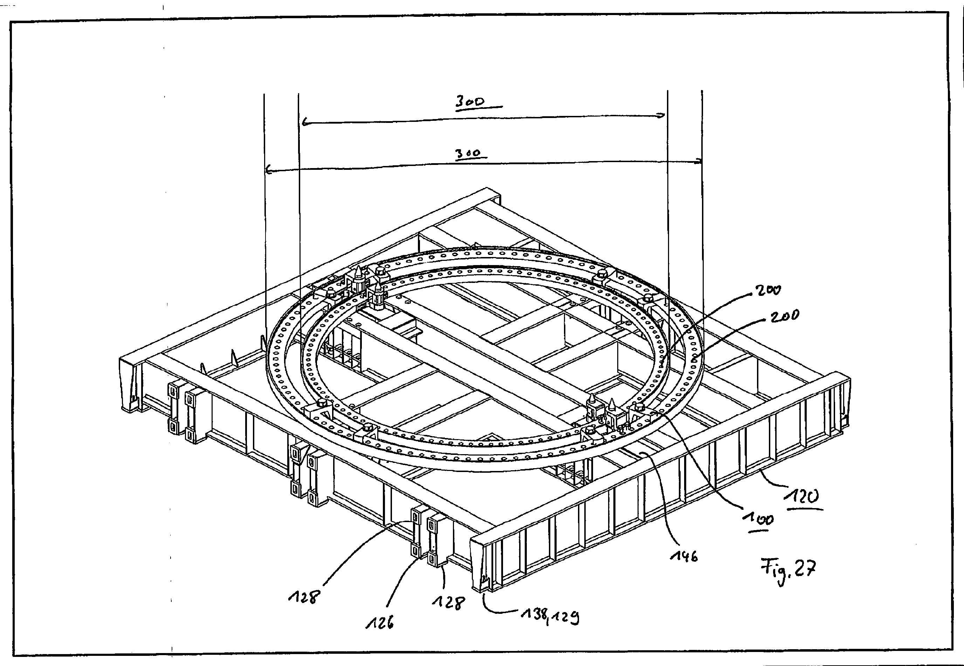

Nachdem der Flansch 200 auf die Oberfläche 132 aufgesetzt wurde, wird das Arretierelement 103 auf die Oberseite 204 des Flansches 200 aufgesetzt, so dass entweder das Widerlagerabschnitt 117 in Berührung mit dem Widerlager 203 kommt, wie dieses in Fig. 1 dargestellt ist, oder alternativ das Arretierelement 103 entsprechend, wie in Fig. 6 bis Fig. 8 dargestellt, in Bezug auf den Flansch 200 ausgerichtet ist. Je nach Dicke 206 des Flansches 200 wird auf den Vorsprung 114 das Distanzstück 109 oder 110 ausgewählt und auf den Vorsprung 114 aufgesteckt. Dabei ist wichtig, dass sich Montage des Distanzstückes der Auflageabschnitt 104 in Berührung mit der Oberseite 204 des Flansches 200 befindet und gleichzeitig der Auflageabschnitt 105 des Arretierelements 103 mit der Oberfläche 132 des Transportrahmens 120 in Berührung befindet. Anschließend wird die Mutter 107 auf dem Gewindeabschnitt 106 gegen das Widerlager 134 verschraubt, so dass zwischen Bolzenkopf 102 und Mutter 107 eine Kraft erzeugt wird, die bewirkt, dass das Arretierelement 103 auf die Oberfläche 132 und die des Transportrahmens 120 und die Oberfläche 204 des Flansches 200 gedrückt wird. Hierdurch wird die Arretierung des Flansches 200 in Bezug auf den Transportrahmen 120 bewirkt, so dass das mit dem Flansch verbundene Element der Windkraftanlage gegenüber dem Transportrahmen 120 arretiert ist. In Abhängigkeit des Durchmessers des Flansches 200, wie dieses in Fig. 27 dargestellt ist, wird entsprechend das Sicherungselement 100 in die verschiedenen Bohrungen 131 eingesetzt, wie dieses in den Fig. 9 und Fig. 10 gezeigt ist.

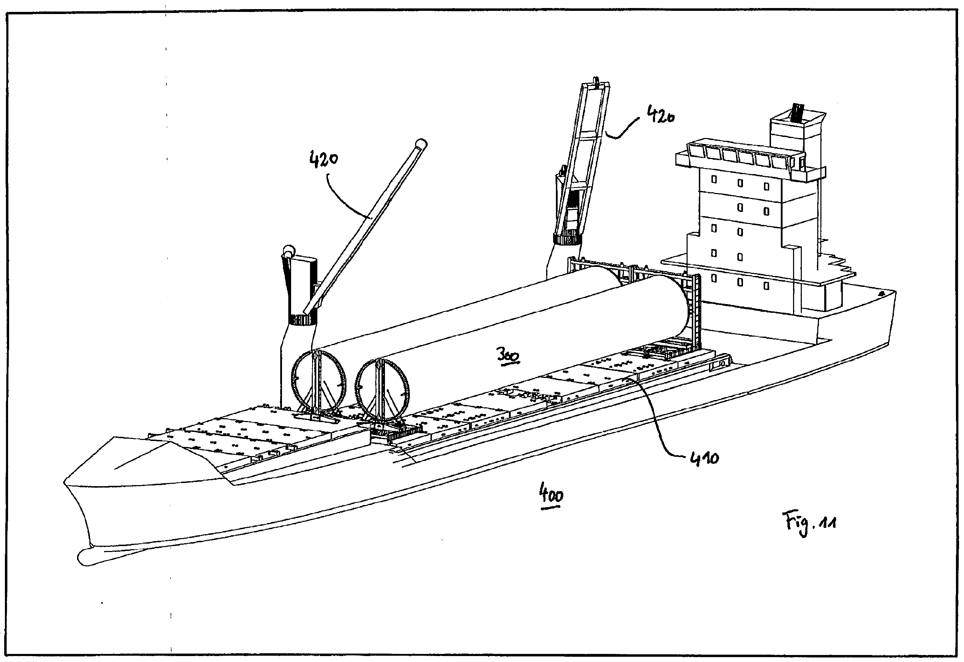

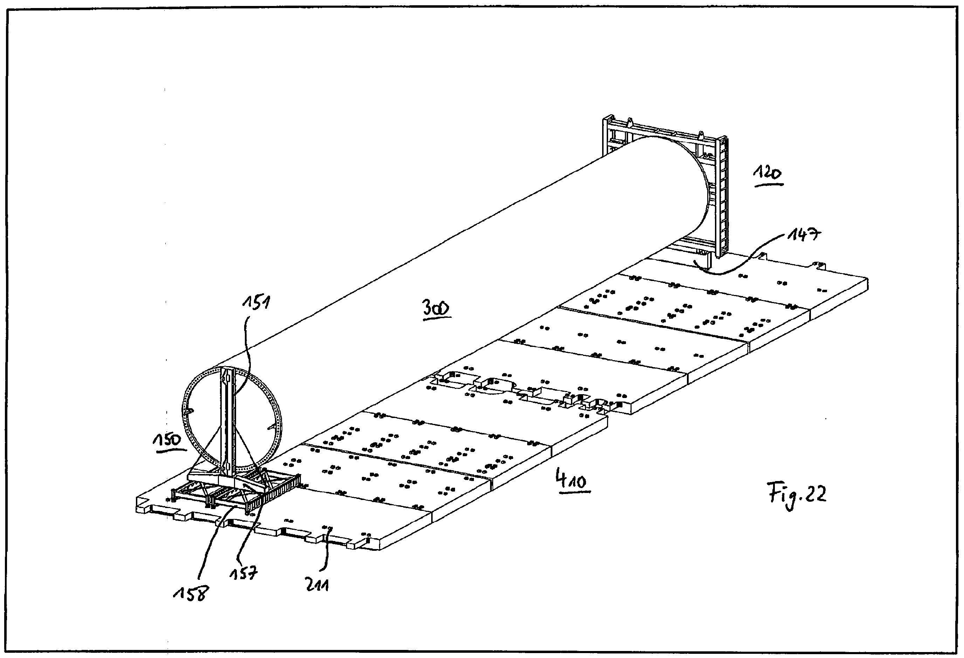

Fig. 11 zeigt den horizontalen Transport eines Turmsegments 300 auf einem Schiff 400. Dabei ist das Turmsegment 300 über ein erfindungsgemäßes Transportsystem auf einer Ladeluke 410 angeordnet, wie dieses in Fig. 22 dargestellt ist. Auf der Ladeluke 410 sind Isosockets 211 vorgesehen, in die Twistlocks 210 eingesetzt werden, mit denen die Elemente der erfindungsgemäßen Transportvorrichtung auf der Ladeluke 410 befestigt werden.

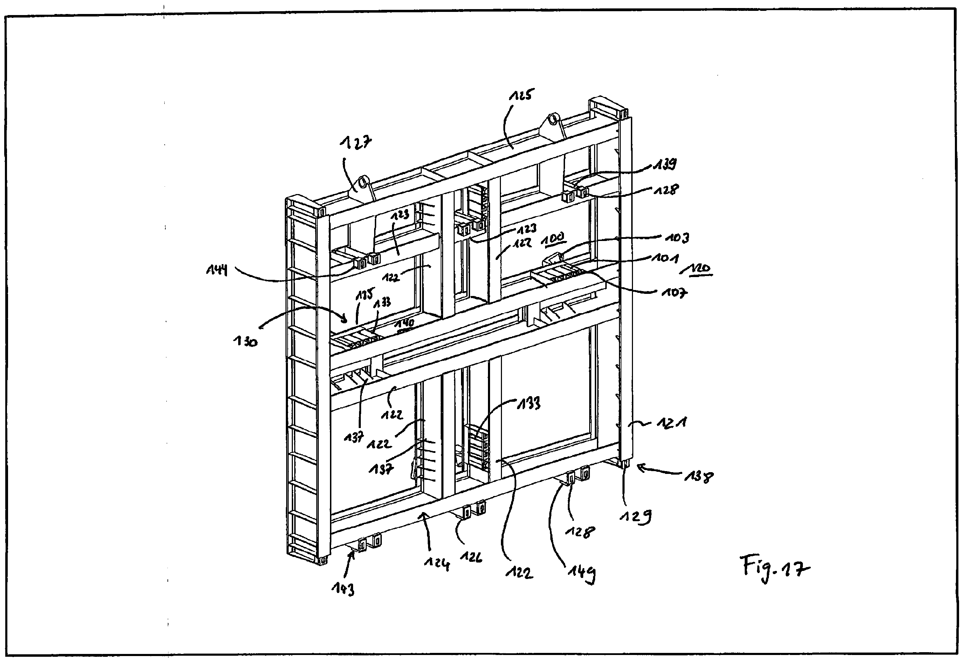

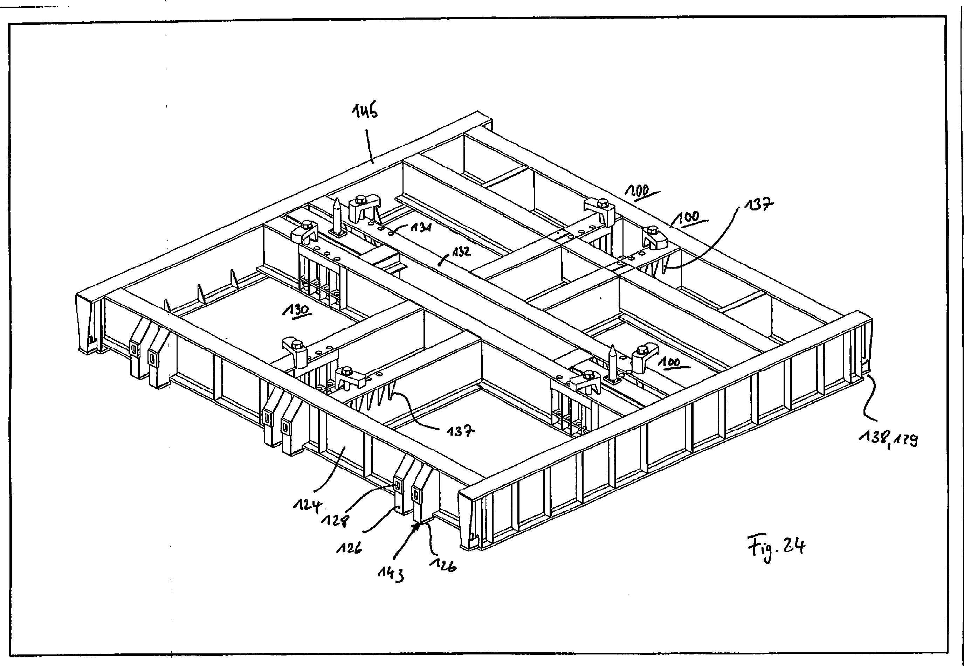

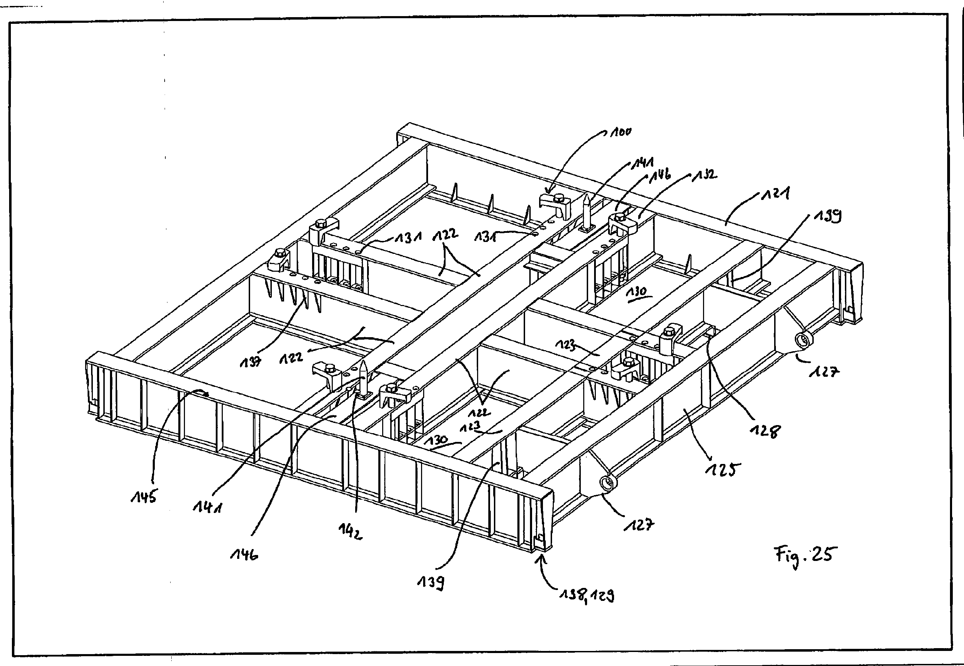

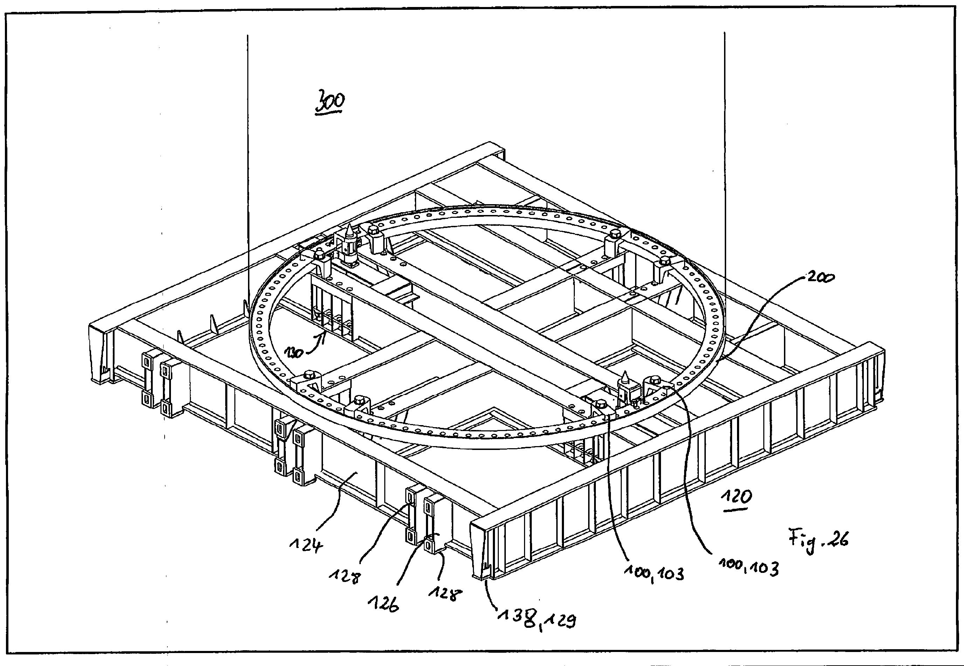

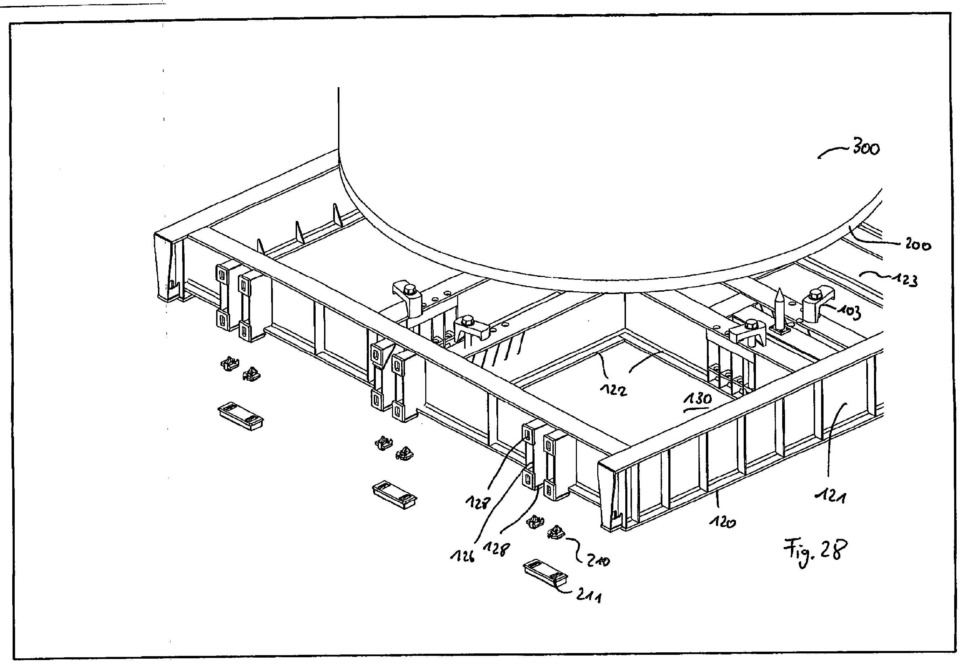

Erster Bestandteil des erfindungsgemäßen Transportsystems ist ein Transportrahmen 120, wie er in Fig. 17 und Fig. 24 bis 28 sowie Fig. 31 dargestellt ist. Der Transportrahmen 120 weist einen Außenrahmen 121 auf, in dem Innentraversen 122 rechtwinklig kreuzförmig angeordnet sind. An den Innentraversen 122 befinden sich die Arretierbereiche 130.

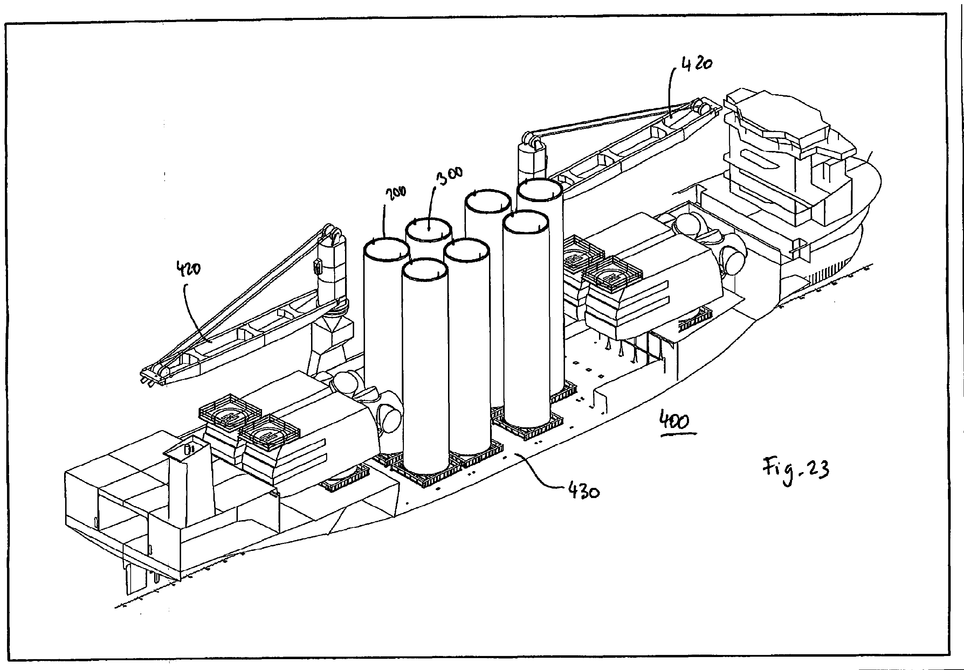

An einer auf der Außenseite des Außenrahmens angeordneten Seitenfläche 124 sind Trägerelemente 126 angeordnet. Auf diesem Trägerelement befinden sich parallel zur Seitenfläche 124 und an der Unterseite 143 des Trägerelements 124 Isosockets 128 zur Aufnahme von Twistlocks 210. Auf der gegenüberliegenden Seitenfläche 125 zur Seitenfläche 124 befinden sich Hubanschläge 127 zur Befestigung von Hubgeschirr einer Hubvorrichtung, bei der es sich beispielsweise um einen Kran handelt, wie er in Fig. 11 und Fig. 23 dargestellt ist.

Parallel zur den Seitenflächen 124, 125 ist eine weitere Innentraverse 123 vorgesehen. An einer Seite der Innentraverse 123 befinden sich Tragelemente 139, an deren Unterseite 144 sich ebenfalls Isosockets 128 befinden. Die Tragelemente 139 fluchten mit den Tragelementen 126. In den Eckbereichen 138 des Außenrahmens 121 befinden sich verstärkte Isosockets 129, um eine alternative Befestigung gegenüber den herkömmlichen Isosockets 128 vorzusehen. Die Anordnung der Isosockets 128 stimmt bevorzugt mit den standardmäßig auf den Ladeluken 110 angeordneten Isosockets für den Containertransport überein.

Auf der Oberseite 145 des Transportrahmens 120 ist ein Tragabschnitt 146 angeordnet, auf dem ein Führungselement 141 in einer Bohrung 142 angeordnet ist. Um unterschiedlichen Durchmessern der Flansche 200 Rechnung zu tragen, befinden sich in dem Tragabschnitt 146 mehrere Bohrungen 142, so dass das Führungselement 141 an verschiedenen Punkten angeordnet werden kann.

Im Arretierbereich 130 an den Innentraversen 122 befinden sich an der gegenüberliegenden Seite der Innenwand 140 Verstärkungselemente 137, die an den gleichen Stellen wie die Lastaufnahmen 133 angeordnet sind. Durch diese Verstärkungselemente 137 ist ein gleichförmiger Lasteintrag in die Innenwand 140 möglich.

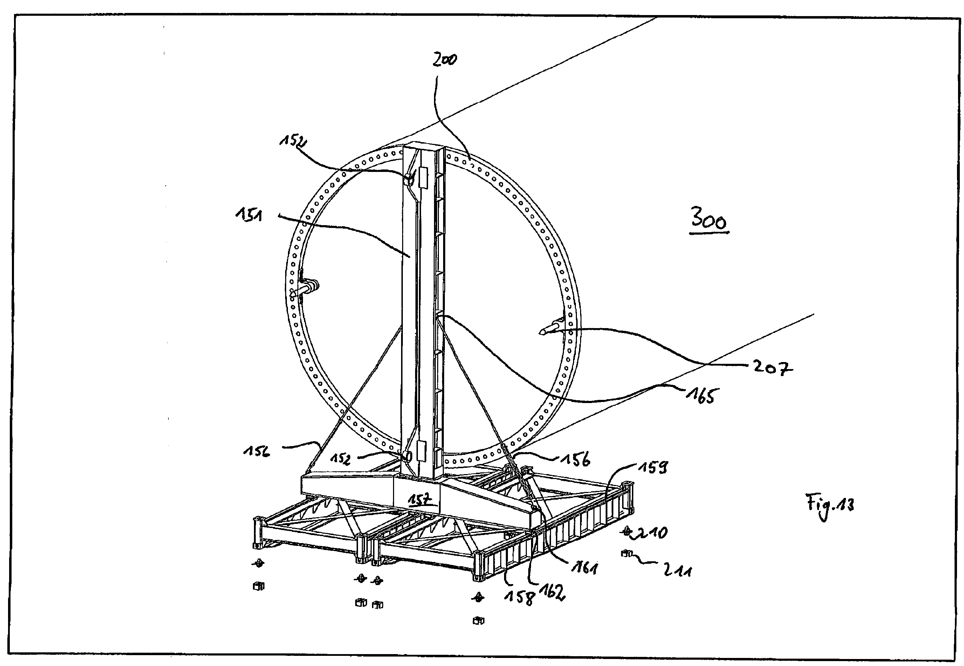

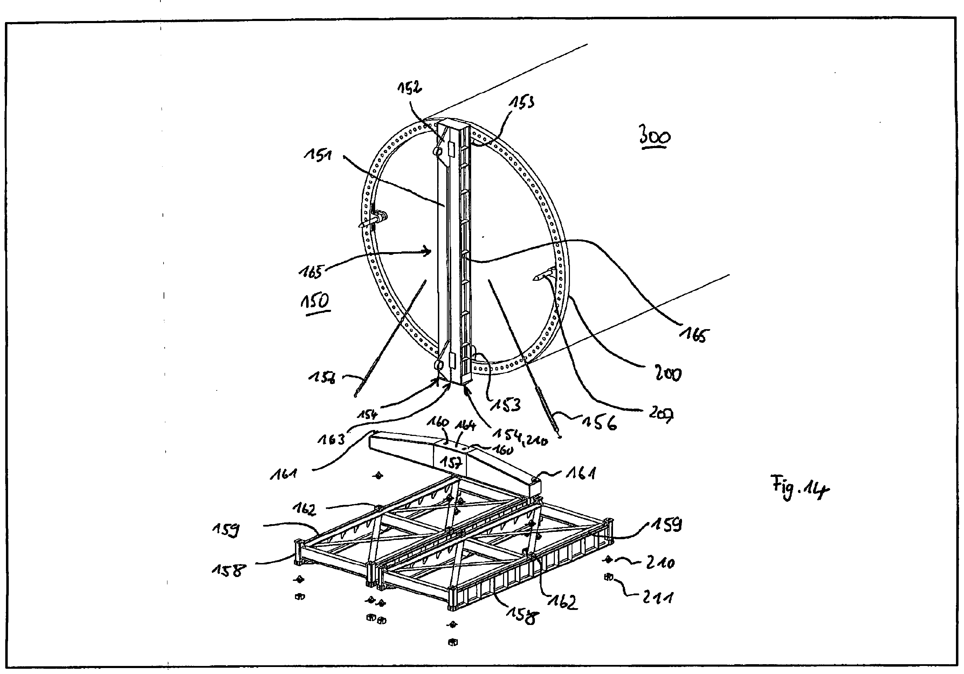

In Fig. 13 und Fig. 14 ist eine Hubsicherungsvorrichtung 150 dargestellt. An einem Turmsegment 300 befindet sich ein Flansch 200. Mit diesem Flansch 200 befindet sich das Hubsicherungselement 150 in Verbindung. Die Hubsicherungseinrichtung 150 besteht aus einer Traverse 151 als Hubsicherungselement, an deren Oberseite Anschläge 152, und an deren Unterseite Klauen 153 vorgesehen sind. Anschläge 152 und Klauen 153 sind entlang der Traverse 151 verschiebbar. Die Klauen 153 befinden sich in den dargestellten Abbildungen in Eingriffsstellung und befinden sich damit im Eingriff mit dem Flansch 200 des Turmsegments 300. An einer Seitenfläche 163 der Traverse 151 befinden sich zwei Öffnungen 154, bei denen es sich um Isosockets handelt. In diese Öffnungen 154 werden Twistlocks 210 eingesetzt. Weiterer Bestandteil des Sicherungselements 150 ist ein Träger 157. Der Träger 157 weist auf einer Seitenfläche 164 Öffnungen 160 auf, bei denen es sich ebenfalls um Isosockets handelt. Die Öffnungen 160 korrespondieren mit den Öffnungen 154. An dem Träger 157 befinden sich Anschläge 161. An der Traverse 151 befinden sich weitere Anschläge 165. Zwischen einem Anschlag 161 und einem Anschlag 165 wird eine Laschung 156 als Diagonalstrebe während des Transports des Turmsegments 300 verspannt. Der Träger 157 befindet sich über Aufnahmen 162 auf einer Schiene 159. Über die Aufnahmen 162 ist der Träger 157 auf den Schienen 159 verschiebbar. Die Schienen 159 befinden sich auf einem Rahmen 158, bei dem es sich um einen Standardcontainerrahmen handelt, der auf einer Ladeluke 410 des Schiffes 400 über Twistlocks 210 montierbar ist.

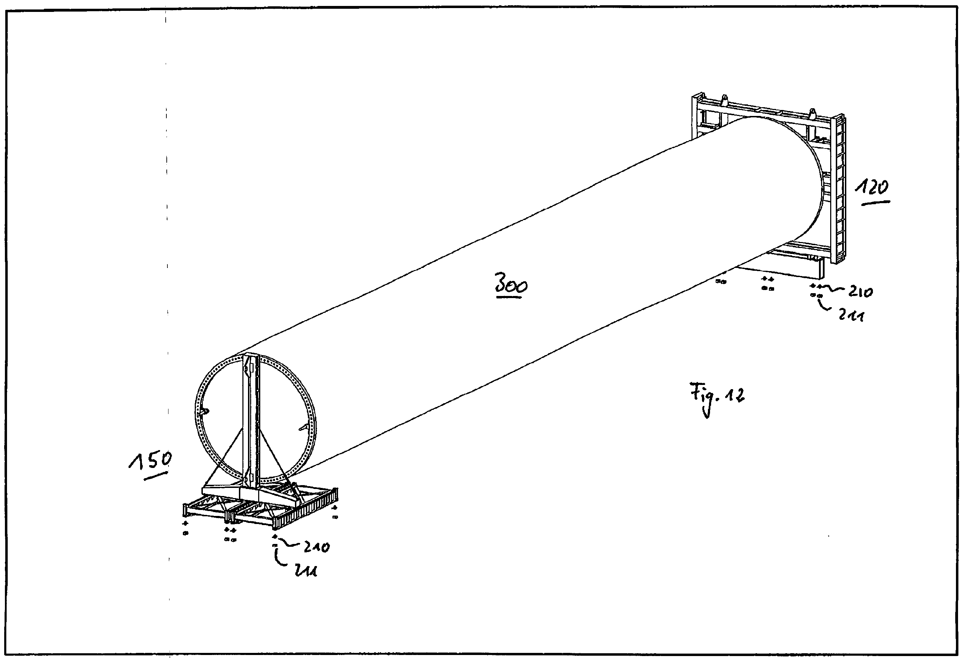

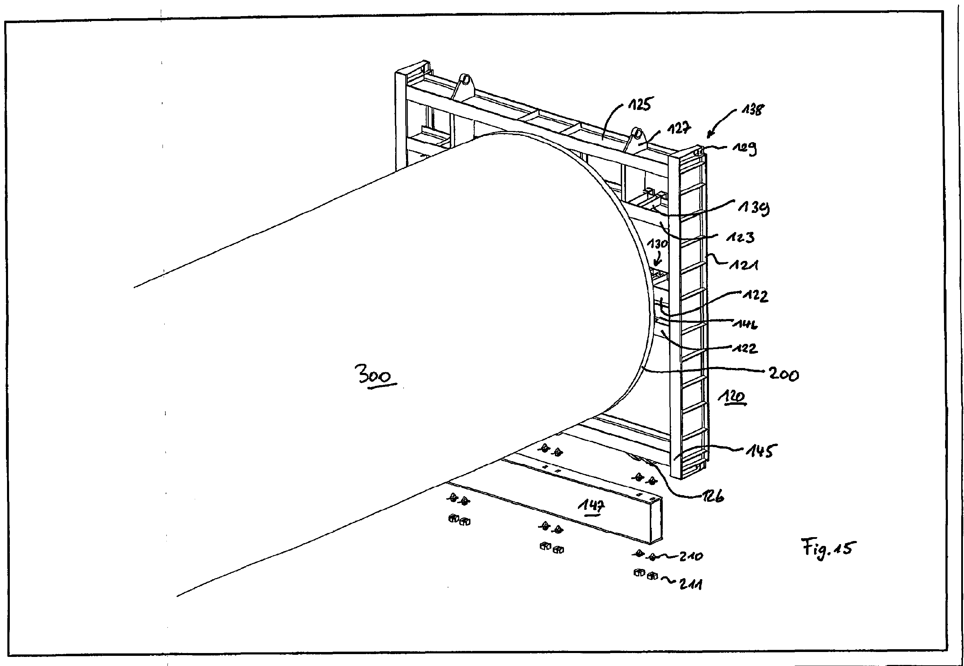

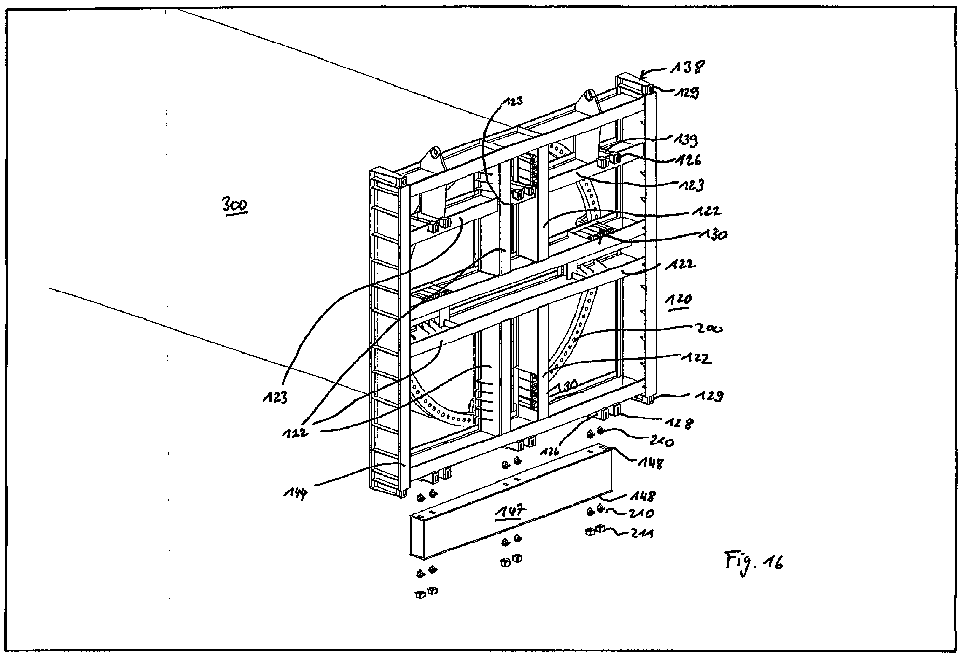

Die Hubsicherungsvorrichtung 150 findet beim horizontalen Transport eines Turmsegments 300 Anwendung, wie dieser in Fig. 12 dargestellt ist. Der Containerrahmen 158, der Träger 157 und das Lasching 156 werden bereits an Bord des Schiffes montiert. Anschließend wird die Traverse 151 auf den Träger 157 abgesenkt, und mit diesem über die Twistlocks 210 verbunden, und anschließend die Laschings 156 mit den Anschlägen 165 an der Traverse 151 zum Transport verbunden. Auf der gegenüberliegenden Seite des Turmsegments 300 befindet sich, wie dieses in Fig. 12, Fig. 15 und Fig. 16 dargestellt ist, der Transportrahmen 120. Der Transportrahmen 120 ist über die Sicherungselemente 100 mit dem Turmsegment 300 verbunden. Zur Montage auf der Ladeluke, wie dieses in Fig. 22 dargestellt ist, ist ein Höhenadapter 147 vorgesehen, der Öffnungen 148 an seiner Ober- und Unterseite aufweist, bei denen es sich ebenfalls um Isosockets handelt. Die Isosocketöffnungen 148 korrespondieren mit den Isosocketöffnungen 211 auf der Ladeluke 410 des Schiffs 400 und mit den Isosockets 128 auf den Seitenflächen 159 der Trägerelemente 126. Der Höhenadapter 147 kann dabei bereits auf der Ladeluke 410 montiert sein, oder auch am Rahmen 120 vor dem Stauen des Turmsegments 130 an Bord des Schiffes 400 auf der Ladeluke 410 angeordnet werden.

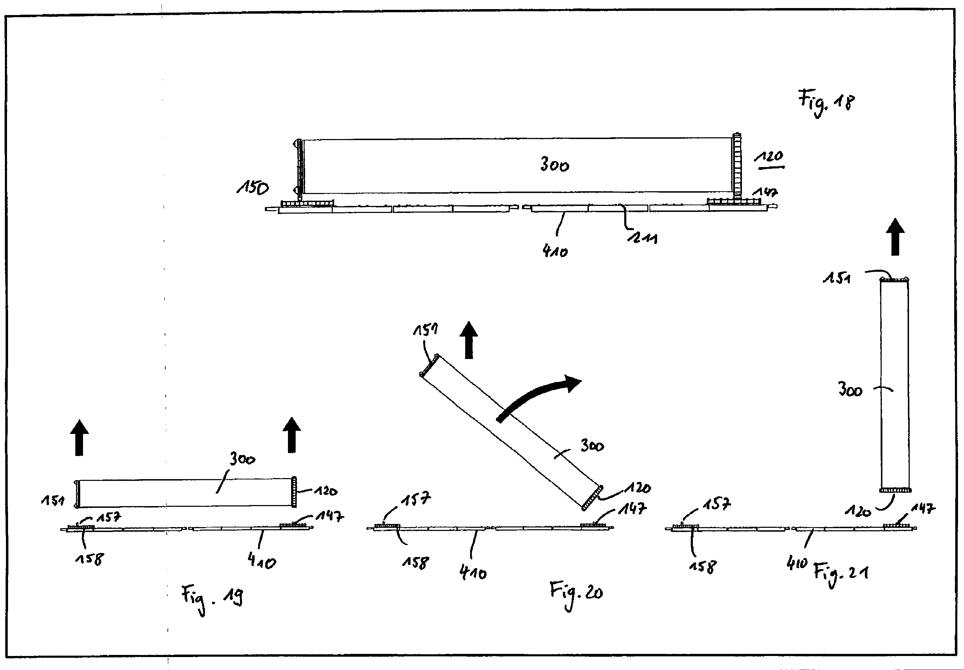

In den Fig. 18 bis 21 ist das Entladen eines horizontal transportierten Turmsegments 300 dargestellt. Dafür wird an den Anschlägen 127 und 152 ein Hubgeschirr (nicht dargestellt) eines Krans 420 angeordnet. Des Weiteren werden die Laschings 156 von den Anschlägen 165 seitlich an der Traverse 151 gelöst. Des Weiteren werden die Twistlocks 210, die die Traverse 151 mit dem Träger 157 verbinden, und die Twistlocks 210, die den Höhenadapter 157 mit den Tragelementen 126 verbinden, gelöst. Anschließend werden die Hubelemente gleichförmig angehoben, wie dieses in Fig. 19 dargestellt ist. Der Höhenadapter 147 und der Rahmen 158 mit dem Träger 157 verbleiben auf der Ladeluke 410. Anschließend wird lediglich die Oberseite des Turmsegments 300 weiter angehoben und verschwenkt, wie dieses in Fig. 20 dargestellt ist, bis eine vertikale Position erreicht wird, wie dieses in Fig. 21 gezeigt ist. Anschließend kann das Turmsegment 300 zu seinem Zielpunkt bewegt werden.

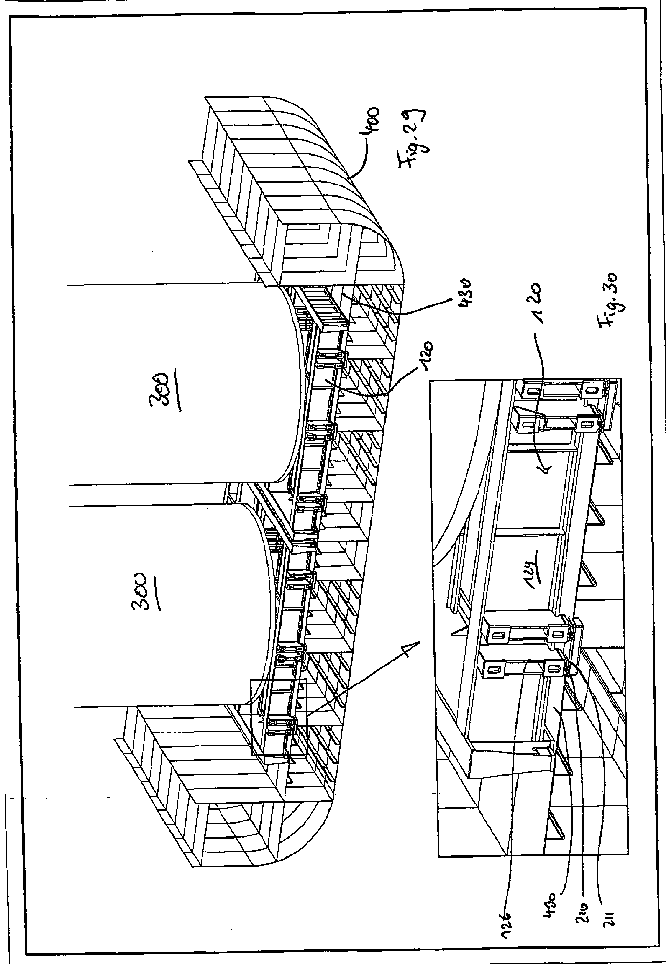

In Fig. 23 ist der vertikale Transport von Turmsegmenten 300 auf einem Transportrahmen 120 an Bord eines Schiffes in dessen Laderaum 430 dargestellt. Innerhalb des Laderaums 430 befinden sich Isosockets 211, wie dieses in Fig. 30 gezeigt ist. Fig. 29 zeigt eine dazu korrespondierende Ansicht zweier auf einem Transportrahmen 120 im Laderaum 430 des Schiffes 400 angeordneten Turmsegmenten 300. Zum vertikalen Transport wird die Unterseite 144 des Transportrahmens 120 auf den Laderaum 430 bzw. auf die dort angeordneten Isosockets, in denen ggf. bereits Twistlocks 211 vorgesehen sind, abgesetzt. Zum Einsatz kommen dabei die Isosockets 128, die auf der Unterseite der Trägerelemente 126 und der Trägerelemente 139 vorgesehen sind.

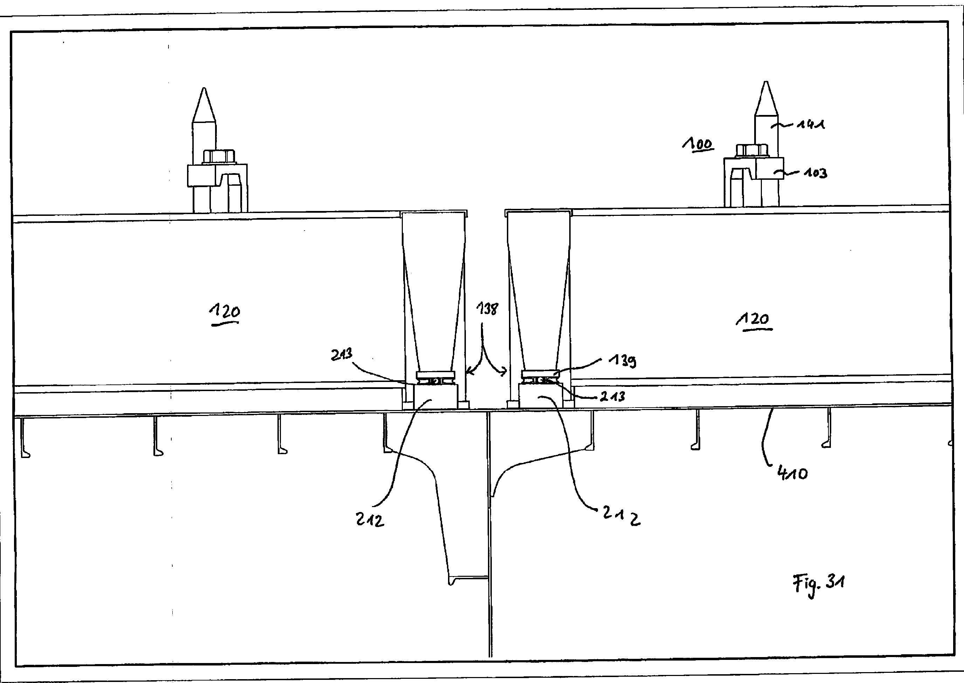

In Fig. 31 ist die Befestigung der Transportrahmen 120 über die Eckbereiche 138 mittels verstärkter Isosockets 129 dargestellt. Dabei werden in verstärkten Isosockets, die auf der Ladeluke 410 oder auf einem anderen Laderaum 430 vorgesehen sind, mit verstärkten Twistlocks 213 gesichert.

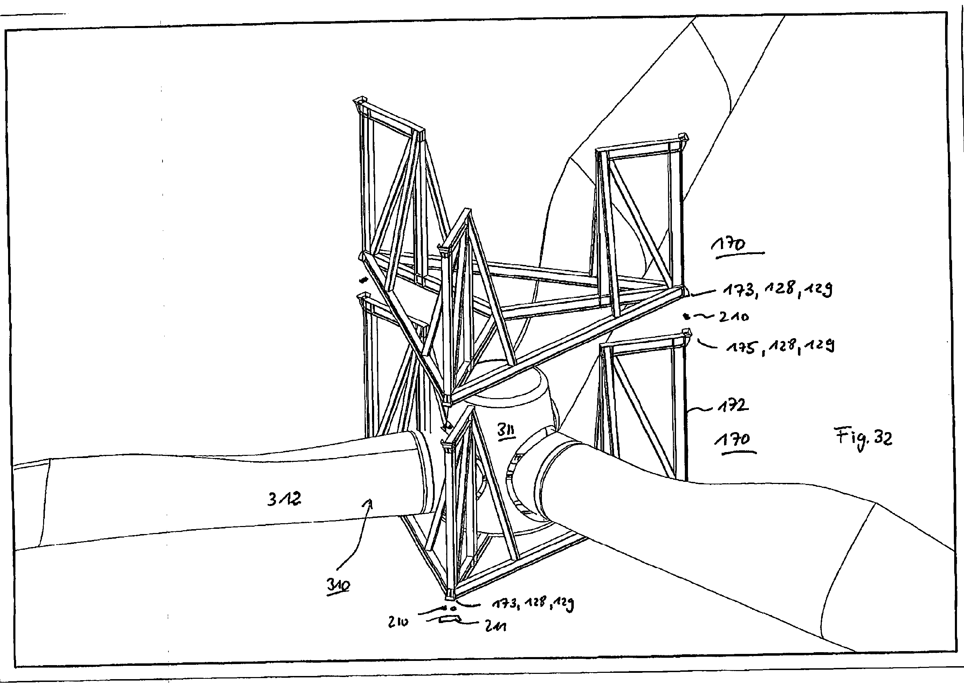

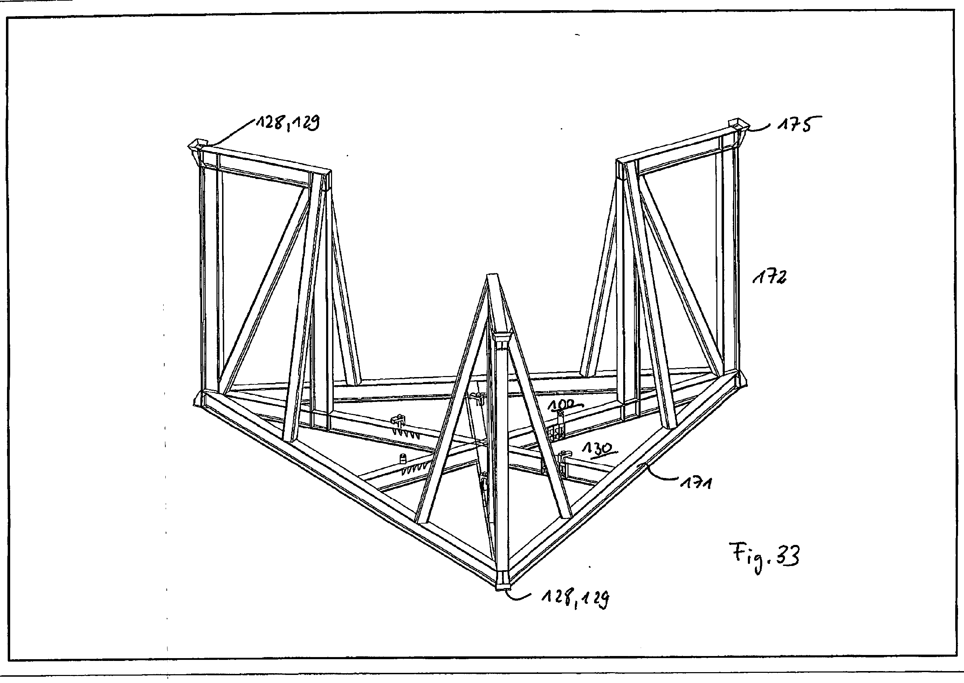

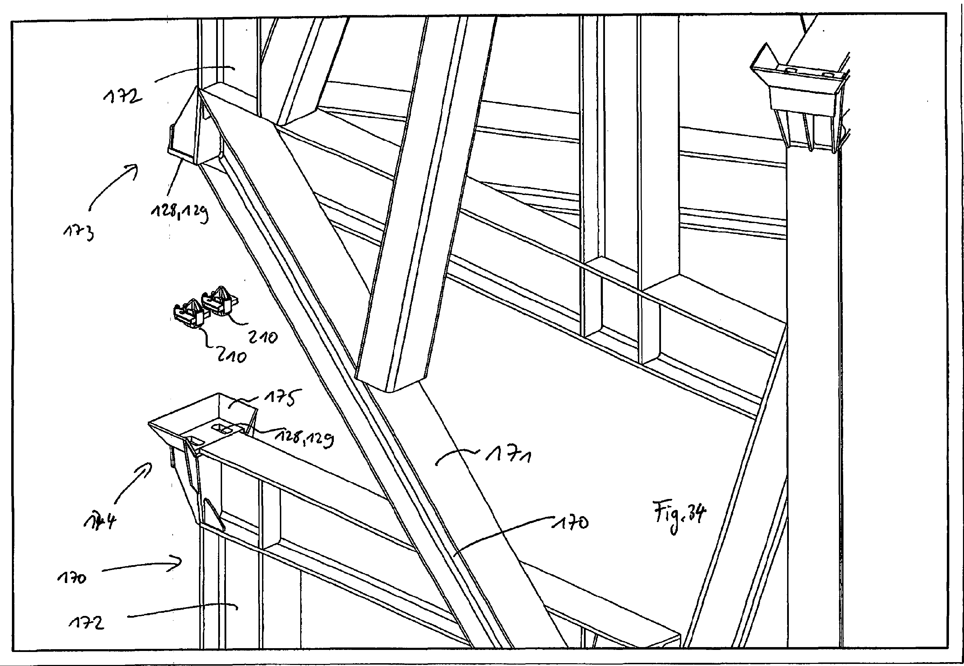

In den Fig. 32 bis 34 ist ein weiterer Einsatz der Sicherungselemente 100 beim Transport von Elementen einer Windkraftanlage dargestellt. Hierbei ist ein Transportrahmen 170 vorgesehen, der für den Transport von Rotoren 310, die aus einer Nabe 311 und Flügeln 312 bestehen, geeignet sind. Auf einem Grundrahmen 171 sind Arretierbereiche 130 in analoger Ausführung zum Transportrahmen 120 angeordnet. Des Weiteren ist für einen dreiflügeligen Rotor 310 der Grundrahmen 171 dreieckig ausgeführt. In den Eckbereichen sind Isosockets 128 oder verstärkte Isosockets 129 vorgesehen. In den Eckbereichen sind Tragelemente 172 vorgesehen, die korrespondierend zu den unteren Ecken 173, in denen die Isosockets 128, 129 vorgesehen sind, obere Verbindungsbereiche 174 vorgesehen, in denen ebenfalls Isosockets 128 oder verstärkte Isosockets 129 vorgesehen sind. Diese Verbindungsbereiche weisen Führungsbleche 175 auf, durch die, wie dieses in Fig. 34 dargestellt ist, ein unterer Eckbereich 173 des nächsten darüber anzuordnenden Transportrahmens 170 fluchtend auf dem oberen Verbindungsbereich mit den darin befindlichen Isosockets angeordnet wird, wobei in den Isosockets Twistlocks 210 vorgesehen sind. Das Vorsehen der Sicherungselemente 100 in den Arretierbereichen 130 entspricht den gleichen Anordnungen, wie dieses im Transportrahmen 120 erfolgt ist. Nach Aufsetzen der Nabe 311 in den Transportrahmen 170 werden die Arretierelemente 103 der Sicherungselemente 100 entsprechend auf den korrespondierenden Flansch 200 der Nabe 311 aufgebracht und anschließend arretiert.

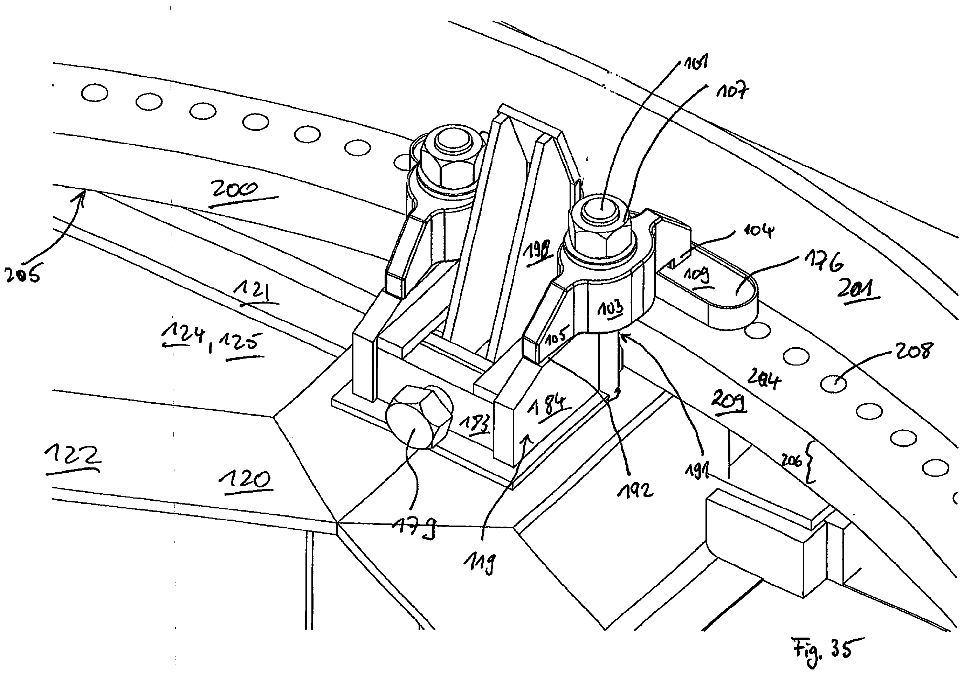

Fig. 35 bis 38 zeigen eine zweite Ausführungsform eines erfindungsgemäßen Sicherungselements 100 in Verbindung mit einem weiteren Transportrahmen 120 und einem Flansch 200 als Verbindungsabschnitt eines Elements einer Windkraftanlage.

Auf dem Transportelement 120 ist in den Anordnungsbereichen 130 ein Widerlager 119 angeordnet. Dieses Widerlager 119 ist entweder fest am Rahmen angebracht, beispielsweise durch verschweißen, gesteckt oder anderweitig angebracht. Das Widerlager 119 setzt sich zusammen aus einer Grundplatte 188 , auf der eine Hintere Seitenwand 183, mit einer Öffnung 182 zum Einsetzen eines Arretiermittels 179, hier ein Gewindebolzen, und Seitenwänden 184, die zusammen einen Halteraum 185 bilden, der auf der vierten Seite eine Öffnung 187 aufweist. An den Seitenwänden 184 ist eine Führungen 186 vorgesehen. Das Widerlager 119 ist mit seien Bestandteilen so aufgebaut, dass ein Arretierkörper 178 einsetzbar ist.

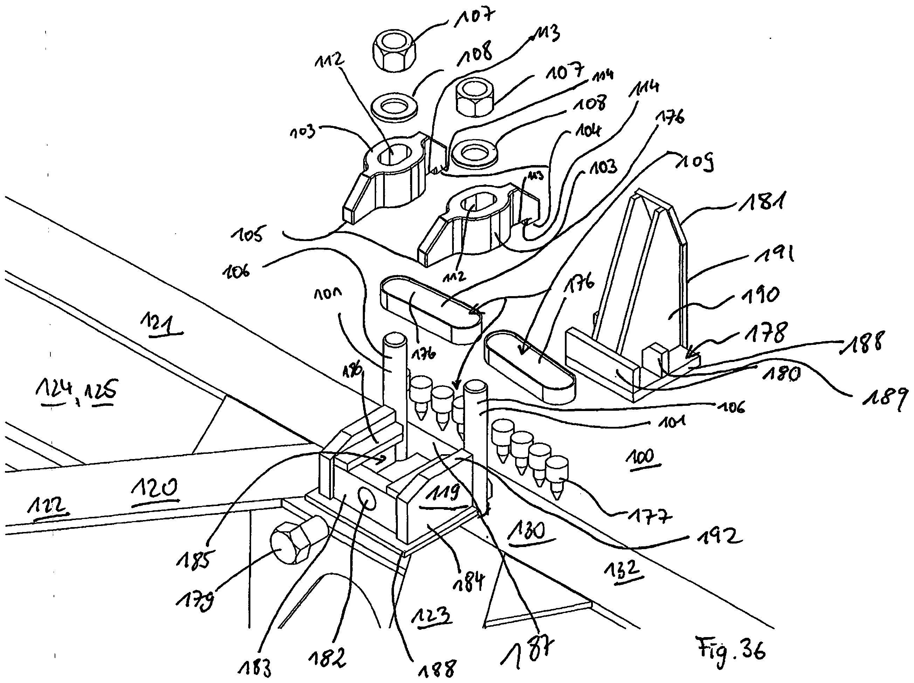

Der Arretierkörper 178 weißt eine Grundplatte 188 auf, auf dem ein Haltekörper 190 mit einer Anlagefläche 191 angeordnet ist (siehe Fig. 36). Weiterhin weist die Grundplatte 188 eine Führung 189 auf, die mit der Führung 186 des Widerlagers 119 korrespondiert. An seiner Oberseite weißt der Haltekörper 190 ein Führungselement 181 auf. Dieses dient dazu, eine Last 300, 300' beim Aufsetzen auf das Transportelement 120 in die richtige Position zu bringen. Der Arretierkörper 178 wird vor dem Absetzen der Last 300, 300' auf das Transportelement 120 in den Halteraum 185 des Widerlagers 119 eingesetzt.

An den Seitenwänden 184 sind Gewindebolzen 101 angeordnet. Hier sind die Bolzen 101 fest mit den Seitenwänden 184 und der Grundplatte 187 verbunden. Alternativ könnten sie auch in Öffnungen 131 in den Innentraversen 122 oder im Außenrahmen 121 eingesetzt sein.

Auf den Flansch 200 der Last 300 werden Distanzstücke 109 aufgebracht. Das Distanzstück 109 setzt sich zusammen aus Auflagebolzen 177 und einer Auflage 176. In Bohrungen 208 werden die Auflagebolzen 177 eingesetzt und die Auflage 177 wird auf diesen platziert.

Nach Aufsetzen der Last 300, 300' werden die Arretierelemente 103 auf die Bolzen 101 aufgesetzt. Der Auflageabschnitt 104 kommt dabei auf dem Distanzstück 109 bzw. der Auflage 176 zum Aufliegen. Der Auflageabschnitt 105 kommt auf der Oberseite 192 der Seitenwand 184 des Widerlagers 119 zum Aufliegen. Anschließend wird eine Unterlegscheibe 108 auf den Bolzen aufgebracht und ein Konterelement 107 hier in Form einer Mutter 107 auf den Gewindeabschnitt 106 des Bolzens 101 aufgeschraubt, bis eine erste haltenden Verbindung gegeben ist, die im wesentlichen vertikale Kräfte aufnimmt.

Zur horizontalen Arretierung wird eine Anlagefläche 191 des Haltekörpers 190 des Arretierkörpers 178 gegen den Flansch 200 bzw. dessen Seitenwand 209 bewegt durch Einschrauben des Gewindebolzens 179 in die Gewindeöffnung 182 in der hinteren Seitenwand 183 des Widerlagers 119. Über den Gewindebolzen 179 wird die horizontale Haltekraft zwischen Widerlager 119 und Flansch 200 erzeugt.

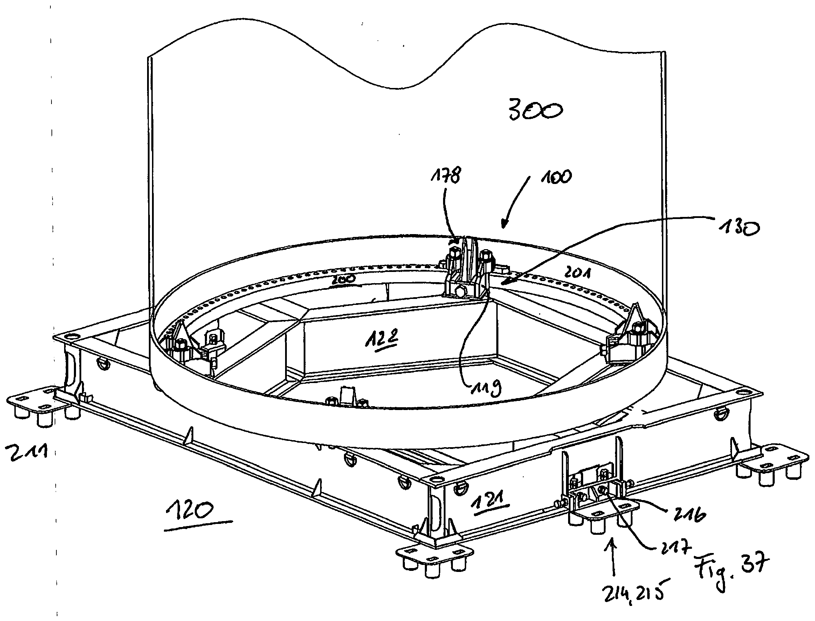

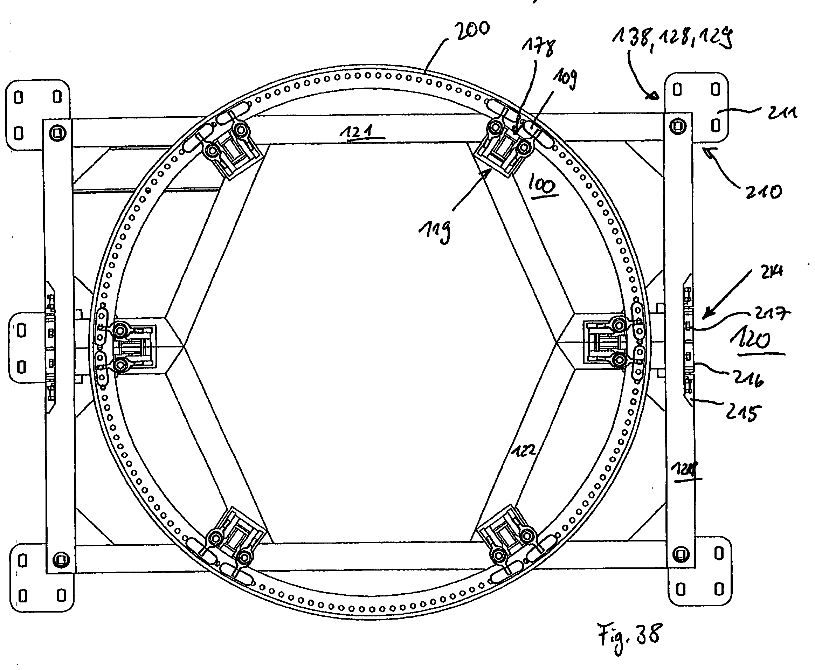

Der Transportelement 120 weißt neben den vertikalen Verbindungmitteln 211, 210 zusätzlich ein horizontales Befestigungsmittel 214 in Form eines Grundkörpers 216 auf, der in eine Aussparung 215 im Transportelement 120 eingesetzt wird. Der Grundkörper 216 wird gegenüber dem Transportrahmen durch Gewindebolzen 217 verkeilt. Weiterhin weißt der Grundkörper 216 an seiner Unterseite nicht dargestellte Vorsprünge auf, die in die Isosockets 211, 212 auf der Transportoberfläche 410' einsetzbar sind. (Fig. 37, 38).

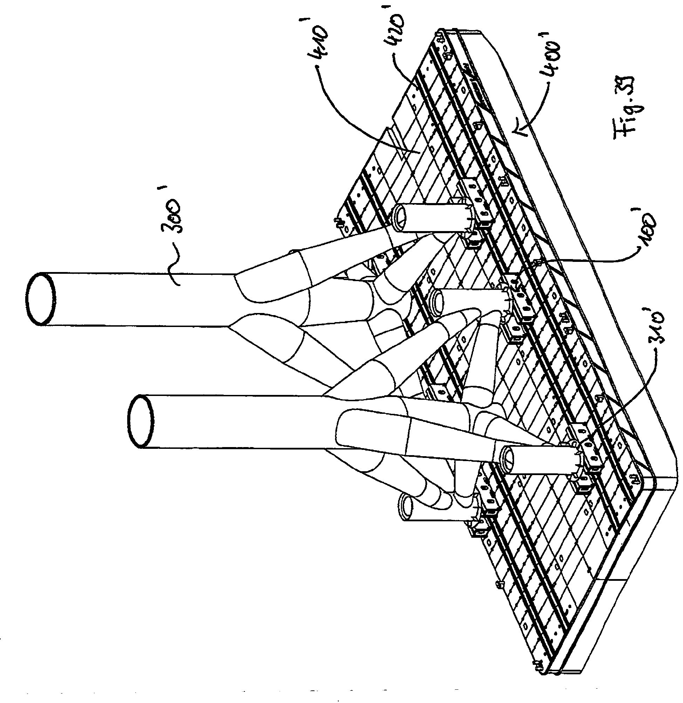

Fig. 39 zeigt den Transport einer Last 300', hier ein s. g. Tripod, der als Fundament für eine Windkraftanlage dient in aufrechter Stellung auf einer Barge 400' als Transportfahrzeug, wobei die Barge 400' eine Transportoberfläche 410' und einen Schienensystem 420' aufweist, mit dem die Last 300' auf die Barge 400' transportiert wird. In Fig. 39 ist die Last 300' auf Transportrahmensystem 100' angeordnet und über Sicherungsvorrichtungen 10 mit dem Transportrahmensystem 100' verbunden. Das Transportrahmensystem 100' ist über Befestigungsmittel, beispielsweise ein Twistlock oder ein besonderer Schwerlasttwistlock, nicht dargestellt, mit der Transportoberfläche 410' verbunden.

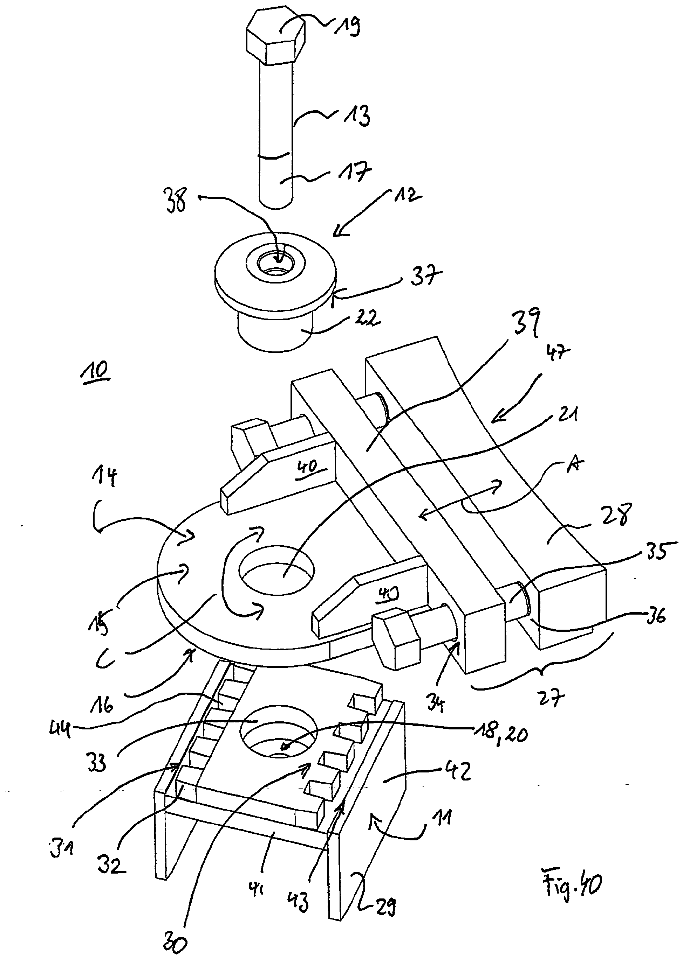

Fig. 40 zeigt eine erste Ausführungsform eines erfindungsgemäßen Sicherungselements 10. Das Sicherungselement 10 weist ein Verriegelungselement 11 und ein Widerlagerelement 12 auf. Zwischen dem Widerlagerelement 12 und dem Verriegelungselement 11 ist ein Sicherungskörper 14 angeordnet. Der Sicherungskörper 14 weist einen ersten oberhalb angeordneten Abschnitt 15 auf, der sich im zusammengebauten Zustand dem Sicherungselement 10 mit dem Widerlagerelement 12 im Eingriff befindet. Des Weiteren weist der Sicherungskörper 14 einen Abschnitt 16 auf, der gegenüberliegend von dem Abschnitt 15 angeordnet ist und sich im montierten Zustand im wirkenden Eingriff mit dem Verriegelungselement 11 und einer Oberseite 101' eines Transportrahmenabschnitts 102' eines Transportrahmensystem 100' befindet. Das Widerlagerelement 12 weist einen Kontaktabschnitt 37 auf. Des Weiteren weist das Widerlagerelement 12 eine Öffnung 38 auf, durch die ein Bolzen 13 hindurch steckbar ist. Der Bolzen 13 weist einen Gewindeabschnitt 17 und einen Krafteinleitungsabschnitt 19 auf.

Der Sicherungskörper 14 weist eine Durchstecköffnung 21 auf, die so ausgeführt ist, dass sie mit einem Einsetzabschnitt 22, der in dieser Ausführungsform am Widerlagerelement 12 angeordnet ist, alternativ aber auch am Verriegelungselement 11 angeordnet sein kann, korrespondiert. Des Weiteren weist auch das Verriegelungselement 11 einen Aufnahmeabschnitt 33 auf, der ebenfalls mit einem Teil des Einsetzabschnitts 22 des Widerlagerelements 12 korrespondiert. Des Weiteren ist ein Eingriffsabschnitt 18 vorhanden, in der Bolzen 13 mit seinem Gewindeabschnitt 17 eingreift und in diesen eingeschraubt wird. Der Eingriffsabschnitt 18 ist entweder Bestandteil des Verriegelungselements 11 oder Bestandteil eines Konterelements 20, wobei das Konterelement 20 als separates Bauteil oder als Bestandteil des Verriegelungselementes 11 ausgeführt sein kann.

Der Sicherungskörper 14 weist des Weiteren ein Verbindungselement 27 auf, mit dem eine haltende Verbindung mit einem Abschnitt 310' der Last, hier die Bodenplatte 310' des Tripods 300', herstellbar ist. Das Verbindungselement 27 kann dabei variabel ausgeführt werden, je nach zu transportierende Last. Im dargestellten Ausführungsbeispiel weist das Verbindungselement 27 ein Passstück 28 auf. Dafür sind in einem Halteabschnitt 39, der am Sicherungskörper 14 angeordnet ist, Öffnungen 34 vorgesehen, durch die Gewindebolzen 35 durchsteckbar sind. Im Passstück 28 sind Aufnahmen 36 für die Gewindebolzen 35 vorgesehen, so dass das Passstück 28 in Bewegungsrichtung gegenüber dem Halteabschnitt 39 verschiebbar ist, so dass das Passstück 28 gegen einen Wandabschnitt 330' der Last 300' bewegbar ist. Dadurch lässt sich auch eine Feinjustierung der Verbindung zwischen Sicherungskörper 14 und Verbindungselement 27 herstellen. Der Halteabschnitt 39 ist über Stege 40 zur Verbindungsverstärkung zwischen Halteabschnitt 39 und Sicherungskörper 14 mit dem Sicherungskörper 14 verbunden. Das Verbindungselement 27 wird jeweils spezifisch in Bezug auf die zu transportierende Lastart ausgelegt.

Das Verriegelungselement 11 weist einen Grundkörper 41 auf, an dem seitlich Führungsabschnitte 29 angeordnet sind. An der Oberseite des Grundkörpers 41 ist ein Halteabschnitt 30 angeordnet. Der Halteabschnitt 30 weist Halteelemente 31 auf, die hier in Form von Vorsprüngen 32 und Rücksprüngen 44 ausgeführt sind. Des Weiteren weist der Grundkörper 41 und der auf dem Grundkörper angeordnete Halteabschnitt 30 den Aufnahmeabschnitt 33 auf. An der Unterseite des Grundkörpers 41 ist der Krafteinleitungsabschnitt 19 angeordnet, in Form eines Konterelements 20, wobei das Konterelement 20 entweder direkt am Grundkörper 41 befestigt oder an diesem in Verbindung mit dem Bolzen 13 anbringbar ist.

Der Halteabschnitt 30 springt gegenüber dem Grundkörper 41 bzw. der Seitenfläche 42 des Führungsabschnitts 29 zurück. Im Bereich dieses Rücksprungs weist das Verriegelungselement 11 einen Kontaktabschnitt 43 zur vertikalen Kraftübertragung auf. Zwischen den Vorsprüngen 32 befinden sich Rücksprünge 44, so dass das Halteelement 31 eine sägezahnartige Form aufweist.

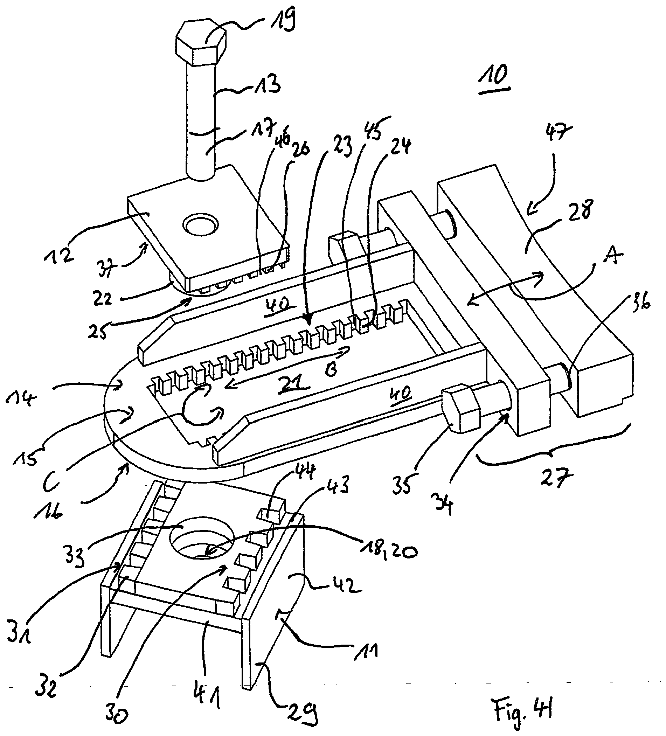

Eine ähnliche Konstruktion ist auch in einer zweiten Ausführungsform in Fig. 41 für ein gegenüber dem Widerlagerelement 12 und dem Verriegelungselement 11 verschiebbar angeordneten Sicherungskörper 14 vorgesehen. Die Durchstecköffnung 21 weist dabei einen Halteabschnitt 23 auf, der Vorsprünge 24 und Rücksprünge 45 aufweist. Korrespondierend ist am Kontaktabschnitt 37 des Widerlagerelements 12 ein Halteabschnitt 25 angeordnet, der ebenfalls Vorsprünge 26 und Rücksprünge 46 aufweist.

Die Vorsprünge 24, 26 und Rücksprünge 45, 46 der Halteabschnitte 23, 25 sind derart ausgeführt, dass der Halteabschnitt 25 des Widerlagerelements 12 in den Halteabschnitt 23 des Sicherungskörpers 14 einsetzbar ist. Solange der Halteabschnitt 25 nicht in den Halteabschnitt 23 eingesetzt ist, kann der Sicherungskörper 14 in dieser Ausführungsform gegenüber dem Widerlagerelement 12 und dem Verriegelungselement 11 im Bewegungsrichtung B verschoben werden. Ist der Halteabschnitt 25 des Widerlagerelements 12 in den Halteabschnitt 13 des Sicherungskörpers 14 eingesetzt, so wird eine Bewegung in Bewegungsrichtung B verhindert.

Ist der Sicherungskörper 14 oberhalb des Verriegelungselements 11 angeordnet und ist das Widerlagerelement 12 mit seinem Einsetzabschnitt 22 in die Durchstecköffnung 21 des Sicherungskörpers 14 und in dem Aufnahmeabschnitt 33 des Verriegelungselementes 11 eingesetzt, der Bolzen 13 aber noch nicht vollständig in den Eingriffsabschnitt 18 des Konterelements 20 eingeschraubt, so ist es möglich, dass der Sicherungskörper 14 in der dargestellten Drehrichtung C in Bezug auf das Widerlagerelement 12 und das Verriegelungselement 11 zu drehen und gegenüber der Last 300' auszurichten. Dieses wird durch die über dem Bolzen mit seinem Eingriffsabschnitt 18 und dem Krafteinleitungsabschnitt 19 des Konterelements 20 einzuleitender Arretierkraft im arretierten Zustand verhindert. Zusätzlich kann ein Sicherungselement, nicht dargestellt, vorgesehen werden, mit dem Verdrehen in Drehrichtung C ebenfalls unterbunden wird.

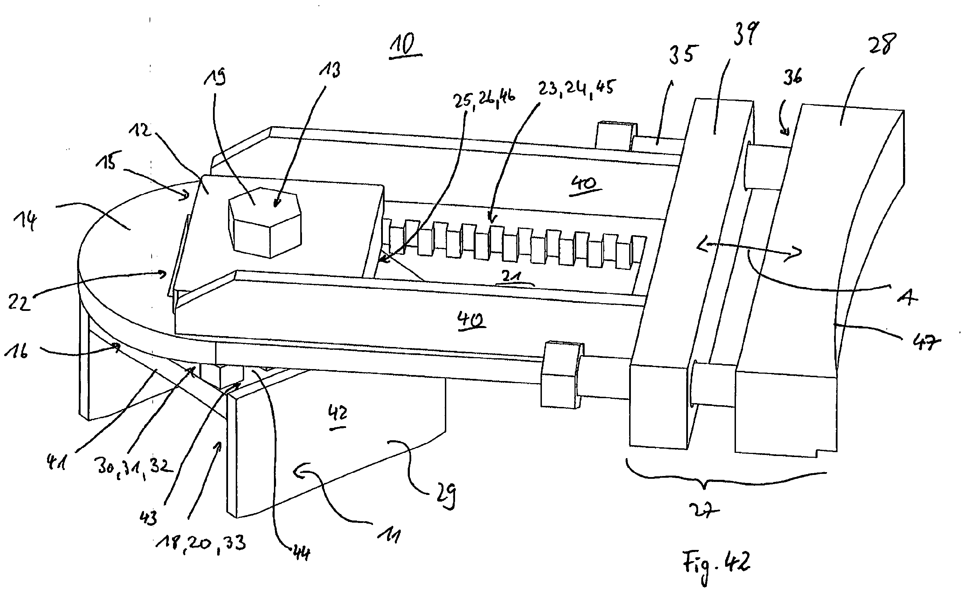

Fig. 42 zeigt den zusammengesetzten Zustand zur Ausführungsform des Sicherungselements 10 gemäß Fig. 41, bei dem das Widerlagerelement 12 mit seinem Halteabschnitt 25 in die Durchstecköffnung 21 des Sicherungskörpers 14 und dessen Halteabschnitt 23 eingesetzt ist. Gleichzeitig ist unterhalb des Sicherungskörpers 14 im Abschnitt 16 das Verriegelungselement 11 angeordnet, der Bolzen 13 in die Öffnung 38 des Widerlagerelements 12 eingesteckt und in den Eingriffsabschnitt 18 des Konterelements 20 mit dessen Gewindeabschnitt 17 eingeschraubt.

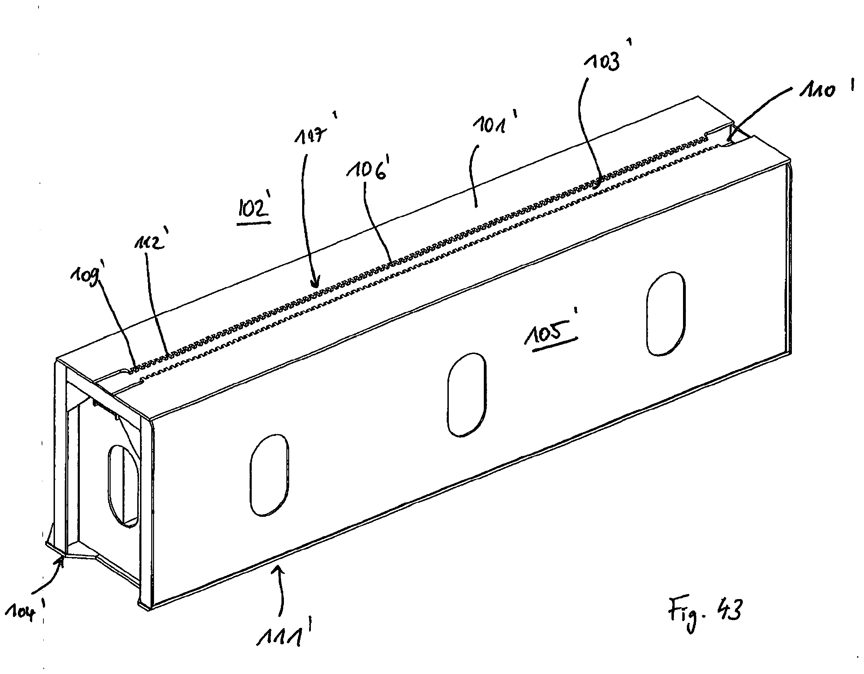

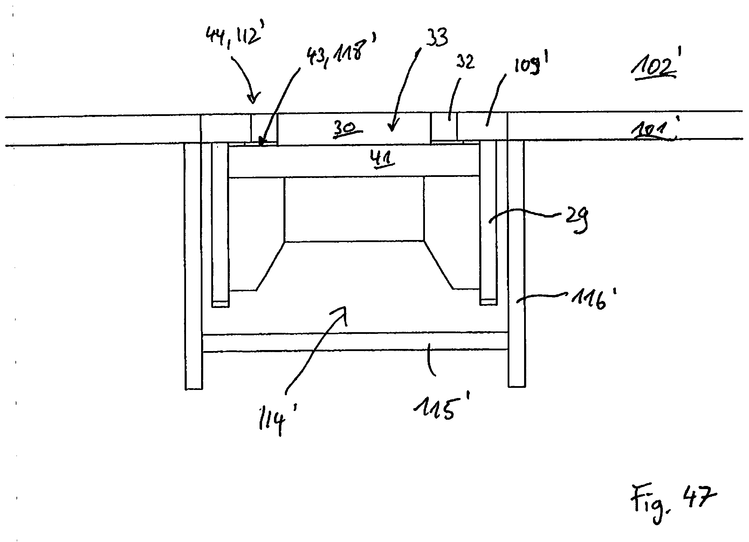

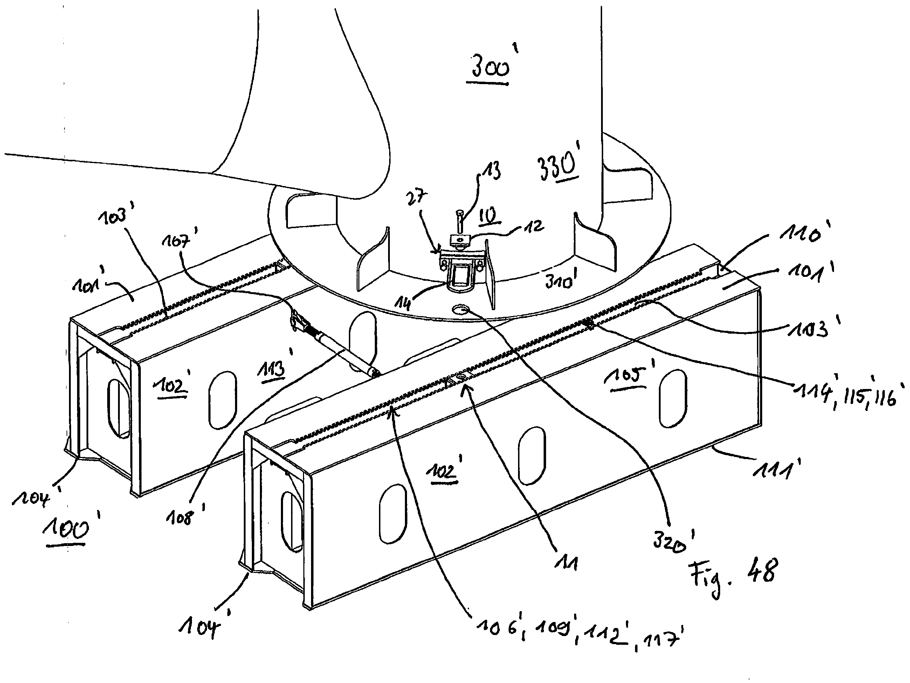

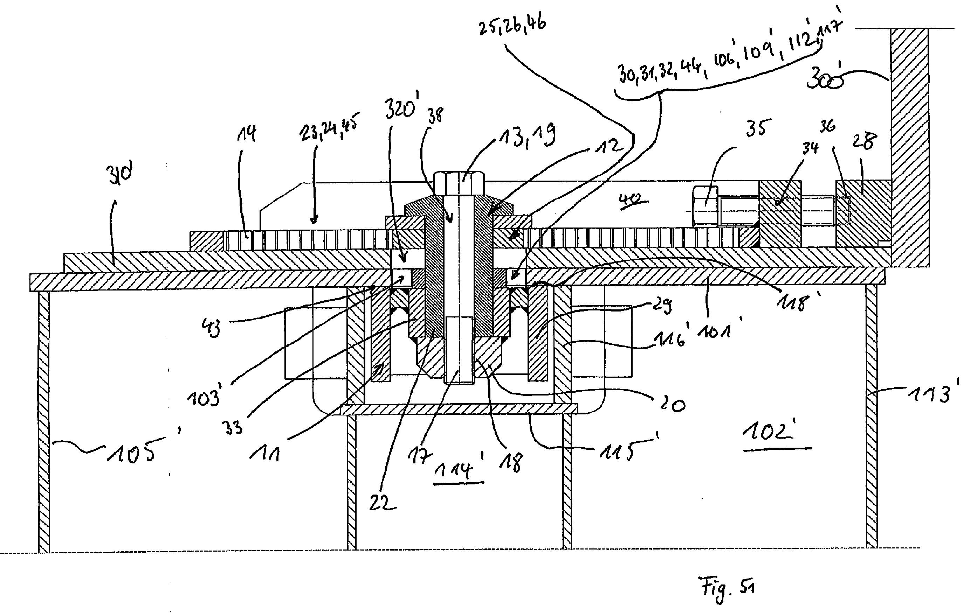

Fig. 43 zeigt eine räumliche Ansicht eines Transportrahmenabschnitts 102' eines Transportrahmensystems 100'. Der Transportrahmenabschnitt 102' weist eine Oberseite 101' auf, die als Auflagefläche für die Last 300' dient. Des Weiteren weist der Transportrahmenabschnitt 102' eine Seitenwand 105' und eine weitere Seitenwand 113' auf, die parallel zu einander ausgeführt sind. In einer Unterseite 111' befinden sich Befestigungsaufnahmen 104' zum Einsetzen von Befestigungsmittel, nicht dargestellt, zum Anbringen des Transportrahmenabschnitts 102' auf einer Transportoberfläche 410' eines Transportmittels 400'. An der Oberseite 101' ist ein Aufnahmeabschnitt 103' dargestellt, der sich schlitzartig entlang der Seitenwand 105' erstreckt. Dieser Aufnahmeabschnitt 103' weist an seinen Enden einen Einsetzabschnitt 110' zum Einsetzen des Sicherungselements 10 auf. An den Seitenrändern 117' des Aufnahmeabschnitts 103' sind Halteelemente 106' angeordnet. In dieser Ausführungsform bestehen die Halteelemente 106' aus Vorsprüngen 109' und Rücksprüngen 112'. Im Inneren des Transportrahmenabschnitts 102' unterhalb des Aufnahmeabschnitts 103 befindet sich eine Führung 114 mit einer Führungsfläche 115' und Seitenfläche 116'. Durch diese Führung ist das Sicherungselement 10 einfach im Aufnahmeabschnitt 103' bewegbar (siehe Fig. 47 und 51). Die Seitenwand 105' stellt die eine lange Außenwand des Transportrahmenabschnittes 102' dar. Wird ein zweiter Transportrahmenabschnitt 102' eingesetzt, wie dieses in Fig. 48 dargestellt ist, so stellt die Seitenwand 113' die dem anderen Transportrahmenabschnitt 102' zugewandte Seite dar. Auf der Seitenwand 113' ist dann eine Aufnahme 107' jeweils angeordnet, zwischen dem ein Verbindungsmittel 108' befestigt werden kann. Bei dem Verbindungsmittel 108' handelt es sich um eine Spannschlossstange, die bewirkt, dass die Transportrahmenabschnitte 102' haltend miteinander in Verbindung bringbar sind. Gleichzeitig kann über die Spannschlossstange auch eine Ausrichtung der beiden Transportrahmenabschnitte 102' im Bezug auf die Last 300' erfolgen, sofern dies notwendig ist.

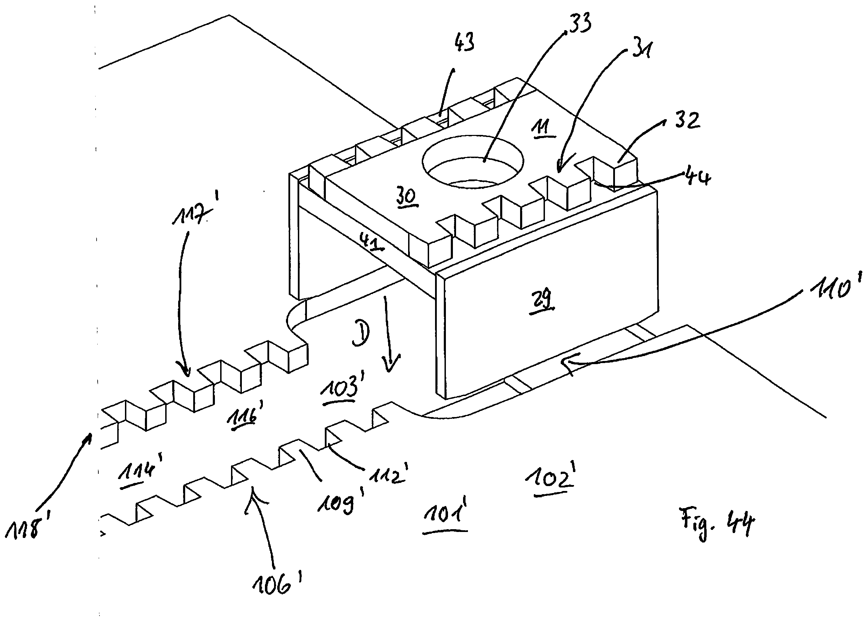

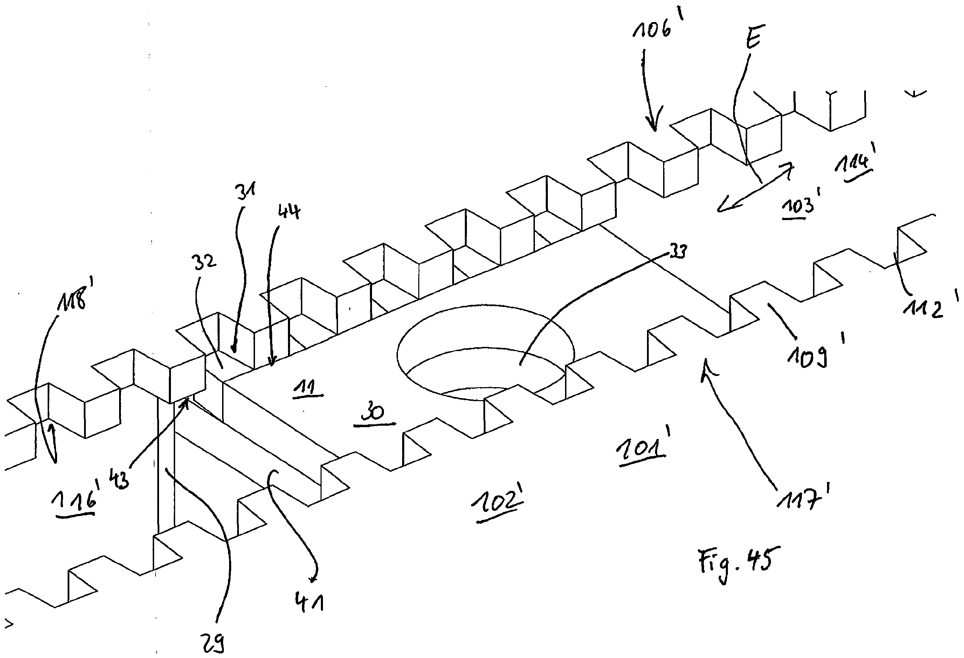

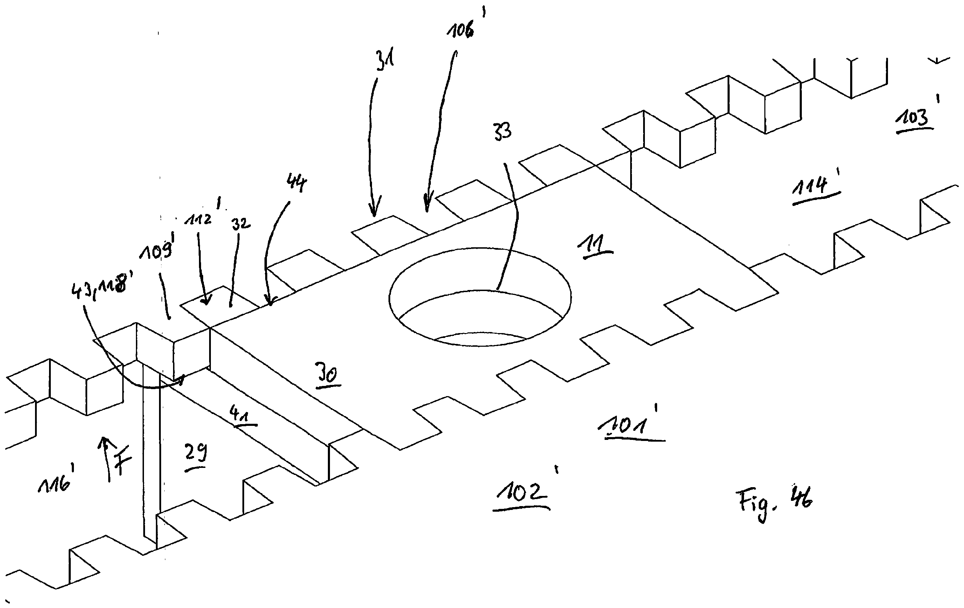

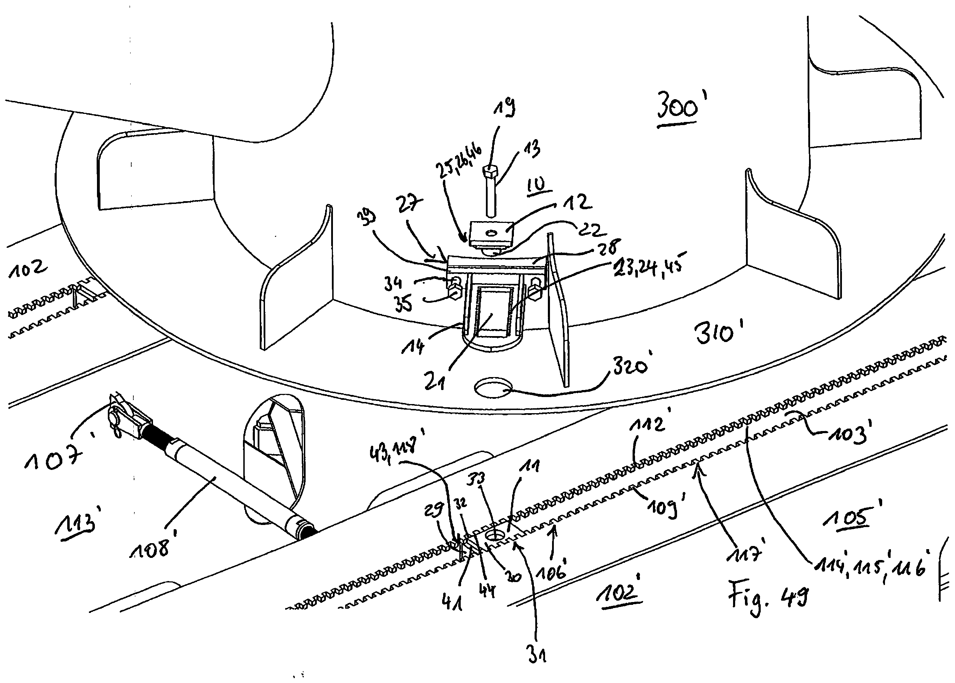

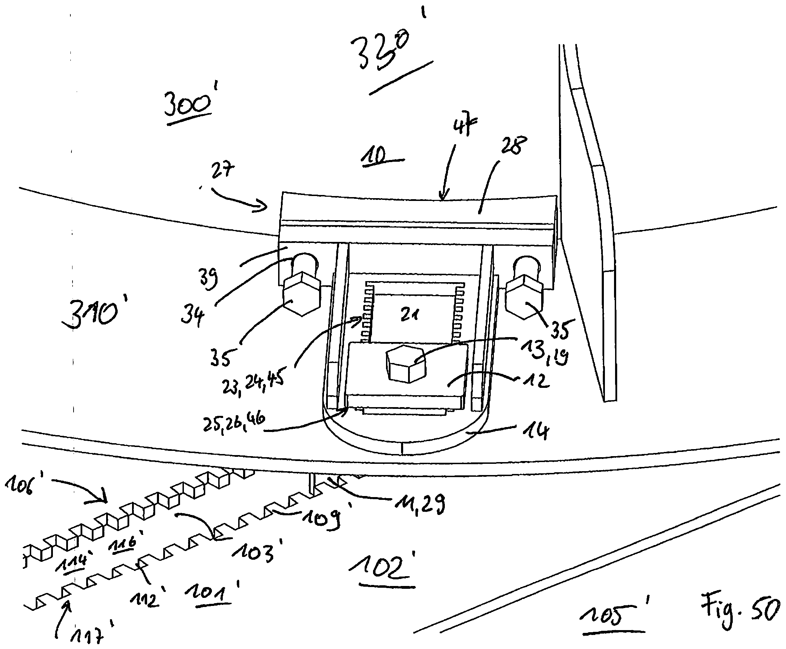

In den Figuren 44 bis 51 wird das Einsetzen des Verriegelungselementes 11 in einen Aufnahmeabschnitt 103' eines Transportrahmenabschnitts 102' eines Transportrahmensystems 100', das auf einer Transportfläche 410' eines Transportmittels 400' befestigt ist, zeigt (siehe Fig. 44 bis 47). Anschließend wird in Fig. 48 und Fig. 49 die Last 300' auf der Oberseite 101' des Transportrahmenabschnitts 102' so abgesetzt, dass eine Öffnung 320' in einer Bodenplatte 310' sich korrespondierend über den Aufnahmeabschnitt 33 des Verriegelungselementes 11 befindet. Anschließend wird die Durchstecköffnung 21 des Sicherungskörpers 14 korrespondierend zur Öffnung 320' in der Bodenplatte 310' auf die Bodenplatte 310' aufgelegt, so dass sich eine Kontaktfläche 47 des Passstücks 28 des Verbindungselementes 27 mit einer Seitenwand 330' des Tripods 310' im Eingriff befindet. Anschließend wird das Widerlagerelement 12 durch die Durchstecköffnung 21, die Öffnung 320' und den Aufnahmeabschnitt 33 gesteckt, wobei der Halteabschnitt 25 mit den Vorsprüngen 26 und den Rücksprüngen 46 des Widerlagerelements 12 in Eingriff mit den Halteabschnitt 23 und seinen Vorsprüngen 24 und Rücksprüngen 45 in Eingriff kommt. Anschließend wird der Bolzen 13 durch die Öffnung 38 des Widerlagerelements 12 gesteckt, so dass der Gewindeabschnitt 17 des Bolzens 13 in den Eingriffsabschnitt 18 des Konterelements 20 eingreift. Nach Festschrauben des Bolzens 13 über den Krafteinleitungsabschnitt 19 in den Eingriffsabschnitt 18 wird eine haltenden Verbindung zwischen dem Sicherungselement 10 der Last 300' und dem Transportrahmenabschnitt 102' des Transportrahmensystems 100' hergestellt. Durch Drehen der Gewindebolzen 35 des Verbindungselements 27 wird das Passstück 28 gegen die Seitenwand 320' der Last 300' geschraubt, bis eine haltende Verbindung mit der Kontaktfläche 47 an allen vorgesehenen Punkten besteht, so dass ein horizontales Bewegen der Last 300' gegenüber dem Transportrahmensystem 100' nicht möglich ist. Ein vertikales Bewegen der Last 300 'gegenüber dem Transportrahmensystem 100' wird durch den festgeschraubten Bolzen 13 und die dadurch zwischen Widerlagerelement 12, Sicherungskörper 14, Oberseite 101' des Transportrahmenabschnitts 102' und Verriegelungselement 11 auf die Bodenplatt 310' eingebrachte Arretierkraft verhindert. Das Lösen der Last 300' erfolgt in umgekehrter Reihenfolge.

Zum Einsetzen des Verriegelungselementes 11 in den Aufnahmeabschnitt 103' wird das Verriegelungselement 11 in den Einsetzabschnitt 110' eingesetzt. Der Einsetzabschnitt 110' geht in die Führung 114', die durch die Führungsflächen 115' und die Seitenflächen 116' bereit gestellt wird, über. Die Höhe der Führungsabschnitte 29 ist dabei so bemessen, dass die Oberseite des Halteabschnittes 30 sich unterhalb der Oberseite 101' befindet, wenn die Führungsabschnitte 29 auf der Führungsfläche 115' aufstehen, wie in Fig. 43 dargestellt. Das Einsetzen des Verriegelungselementes 11 in den Einsetzabschnitt 110 erfolgt in Bewegungsrichtung D. Anschließend wird das Verriegelungselement 11 in Bewegungsrichtung E im Aufnahmeabschnitt 103' soweit verschoben, bis die gewünschte Stelle im Aufnahmeabschnitt 103' erreicht ist, an der später die Befestigung der Last 300' durchgeführt werden soll. Ist das Verriegelungselement 11 an der entsprechenden Stelle angekommen, wird gewährleistet, dass die Vorsprünge 32 des Halteabschnitts 30 in Flucht mit den Rücksprüngen 112' und des Halteelements 106' des Aufnahmeabschnitts 103' sind und analog die Vorsprünge 109' des Halteelements 106' mit den Rücksprüngen 44 des Halteabschnitts 30 übereinstimmend sind. Ist diese erfolgt, kann im weiteren Fortgang der Montage das Verriegelungselement 11 in Bewegungsrichtung F so angehoben werden, dass der Kontaktabschnitt 43 des Verriegelungselements 11 mit einem entsprechenden Kontaktabschnitt 118' der Oberseite 101' des Transportrahmenabschnitts 102' in Eingriff kommt. Je nach Ausführung fluchtet die Oberseite des Halteabschnitts 30 in dieser Position mit der Oberseite 101' des Transportrahmenabschnitts 102' oder der Halteabschnitt 30 befindet sich unterhalb der Oberseite 101' des Transportrahmenabschnitts 102', wenn gewährleistet werden soll, dass die Last 300' lediglich auf der Oberseite 101' des Transportrahmenabschnitts 102' aufliegt.

**Bezugszeichenliste:**

| | | | |
|---|---|---|---|
| 10 | Sicherungselement | 36 | Aufnahme |
| 11 | Verriegelungselement | 37 | Kontaktabschnitt |
| 12 | Widerlagerelement | 38 | Öffnung |
| 13 | Bolzen | 39 | Halteabschnitt |
| 14 | Sicherungskörper | 40 | Steg |
| 15 | Abschnitt | 41 | Grundkörper |
| 16 | Abschnitt | 42 | Seitenfläche |
| 17 | Gewindeabschnitt | 43 | Kontaktabschnitt |
| 18 | Eingriffsabschnitt | 44 | Rücksprung |
| 19 | Krafteinleitungsabschnitt | 45 | Rücksprung |
| 20 | Konterelement | 46 | Rücksprung |
| 21 | Durchstecköffnung | 47 | Kontaktfläche |
| 22 | Einsetzabschnitt | 100 | Sicherungselement |
| 23 | Halteabschnitt | 100' | Transportrahmensystem |
| 24 | Vorsprung | 101 | Bolzen |
| 25 | Halteabschnitt | 101' | Oberseite |
| 26 | Vorsprünge | 102 | Bolzenkopf |
| 27 | Verbindungselement | 102' | Transportrahmenabschnitt |
| 28 | Passstück | 103 | Arretierelement |
| 29 | Führungsabschnitt | 103' | Aufnahmeabschnitt |
| 30 | Halteabschnitt | 104 | Auflageabschnitt |
| 31 | Halteelement | 104' | Befestigungsaufnahme |
| 32 | Vorsprung | 105 | Auflageabschnitt |
| 33 | Aufnahmeabschnitt | 105' | Seitenwand |
| 34 | Öffnung | 106 | Gewindeabschnitt |
| 35 | Gewindebolzen | 106' | Halteelement |
| 107 | Mutter | 129 | verstärkter Isosocket |
| 107' | Aufnahme | 130 | Arretierbereich |
| 108 | Unterlegscheibe | 131 | Bohrung |
| 108' | Verbindungsmittel | 132 | Oberfläche |
| 109 | Distanzstück | 133 | Lastaufnahme |
| 109' | Vorsprung | 134 | Widerlager |
| 110 | Distanzstück | 135 | Verstärkungselement |
| 110' | Einsetzabschnitt | 136 | Bohrung |
| 111 | Pufferelement | 137 | Verstärkungselement |
| 111' | Unterseite | 138 | Eckbereich |
| 112 | Bohrung | 139 | Trägerelement |
| 112' | Rücksprung | 140 | Innenwand |
| 113 | Ausleger | 141 | Führungselement |
| 113' | Seitenwand | 142 | Bohrung |
| 114 | Vorsprung | 143 | Unterseite |
| 114' | Führung | 144 | Unterseite |
| 115 | Vorsprung | 145 | Oberseite |
| 115' | Führungsfläche | 146 | Tragabschnitt |
| 116 | Vertiefung | 147 | Höhenadapter |
| 116' | Seitenfläche | 148 | Öffnung/Isosocket |
| 117 | Widerlagerabschnitt | 150 | Hubsicherungsvorrichtung |
| 117' | Seitenrand | 151 | Traverse |
| 118 | Außenseite | 152 | Hubanschlag |
| 118' | Kontaktabschnitt | 153 | Klaue |
| 119 | Widerlager | 154 | Öffnung/Isosocket |
| 120 | Transportrahmen | 155 | Anschlag |
| 121 | Außenrahmen | 156 | Lasching |
| 122 | Innentraverse | 157 | Träger |
| 123 | Innentravers | 158 | Rahmen |
| 124 | Seitenfläche | 159 | Schiene |
| 125 | Seitenfläche | 160 | Öffnung/Isosocket |
| 126 | Trägerelement | 161 | Anschlag |
| 127 | Hubanschlag | 162 | Aufnahme, verschiebbar |
| 128 | Isosocket | 163 | Seitenfläche |
| 164 | Seitenfläche | 209 | Seitenwand |
| 165 | Anschlag | 210 | Twistlock |
| 170 | Transportrahmen | 211 | Isosocket |
| 171 | Grundrahmen | 212 | verstärkter Isosocket |
| 172 | Tragelement | 213 | verstärkter Twistlock |
| 173 | Ecke | 214 | Aussparung |
| 174 | Verbindungsbereich | 215 | Horizontales Befestigungsmittel |
| 175 | Führungselement | 216 | Grundkörper |
| 176 | Auflage | 217 | Gewindebolzen |
| 177 | Auflagebolzen | 300 | Turmsegment |
| 178 | Arretierkörper | 300' | Last, Tripod |
| 179 | Arretiermittel, Gewindebolzen | 310 | Rotor |
| 180 | Seitenwand | 310' | Bodenplatte |
| 181 | Führungselement | 311 | Nabe |
| 182 | Öffnung | 312 | Flügel |
| 183 | hintere Seitenwand | 320' | Öffnung |
| 184 | Seitenwand | 330' | Seltenwand |
| 185 | Halteraum | 400 | Schiff |
| 186 | Führung | 400' | Transportmittel, Barge |
| 187 | Öffnung | 410 | Ladeluke |
| 188 | Grundplatte | 410' | Transportoberfläche |
| 189 | Führung | 420 | Kran |
| 190 | Haltekörper | 420' | Schienensystem |
| 191 | Anlagefläche | 430 | Laderaum |
| 192 | Oberseite | A | Bewegungsrichtung |
| 200 | Flansch | B | Bewegungsrichtung |
| 201 | Anschluss | C | Drehrichtung |
| 202 | erhöhter Abschnitt | D | Bewegungsrichtung |
| 203 | Widerlager | E | Bewegungsrichtung |
| 204 | Oberseite | F | Bewegungsrichtung |
| 205 | Unterseite | | |
| 206 | Dicke | | |
| 207 | Führungselement | | |
| 208 | Bohrung | | |

## Patentansprüche

1. Transport- und Sicherungssystem geeignet für den Transport einer schweren Last (300), insbesondere einer Komponente einer Windkraftanlage, auf einer Transportoberfläche (410) eines Transportfahrzeugs (400), insbesondere eines Schiffs, mit einem Transportelement (120, 100, 102) in Form eines Transportrahmens (120) oder eines Transportrahmensystems (100) mit wenigstens einem Transportrahmenabschnitt (102), mit einem an Transportrahmen (120) oder an dem Transportrahmenabschnitt (102) angeordneten Aufnahmeabschnitt zur Aufnahme eines Schwerlastsicherungselement (10) zum Sichern der Last (300) auf dem Transportrahmen (120) oder auf dem Transportrahmenabschnitt (102), und mit wenigstens einer Befestigungsmittelaufnahme zur Aufnahme eines Befestigungsmittels zum Sichern des Transportrahmens (120) oder des Transportrahmenabschnitts (102) auf einer Transportoberfläche (410) und einem Schwerlastsicherungselement (10) zum Sichern der Last (300) auf dem Transportrahmen (120) oder auf dem Transportrahmenabschnitt (102) mit wenigstens einem Bolzenelement (101, 13), das mit dem Transportrahmen (120) oder mit dem Transportrahmenabschnitt (102) in Wirkverbindung steht, mit wenigstens einem Arretierelement (103), das auf dem Bolzenelement (101) anordbar oder angeordnet ist, wobei das Arretierelement (103) einen ersten Auflageabschnitt (105), der im montierten Zustand in Wirkverbindung mit dem Transportrahmen (120) oder mit dem Transportrahmenabschnitt (102) steht, und einen zweiten Auflageabschnitt (104) der im montierten Zustand in Wirkverbindung mit einem Abschnitt (200, 320) der Last (300) steht, aufweist, wobei über das Arretierelement (103) über die Auflageabschnitte (104, 105) eine die Last (200, 300) auf dem Transportrahmen (120) oder dem Transportrahmenabschnitt (102) haltende Kraft übertragbar ist.

2. Transport- und Sicherungssystem nach Anspruch 1, **dadurch gekennzeichnet, dass** die Wirkverbindung des Bolzenelements (101, 13) mit dem Transportrahmen (120) oder dem Transportrahmenabschnitt (102) über eine Öffnung (131, 103) im Transportrahmen (120) oder im Transportrahmenabschnitt (102) herstellbar ist, in die das Bolzenelement (101, 13) einsteckbar ist, oder dass das Bolzenelement (101, 13) am Transportrahmen (120) oder am Transportrahmenabschnitt (102) angeordnet ist.

3. Transport- und Sicherungssystem nach Anspruch 1 oder 2, **dadurch gekennzeichnet, dass** zwischen Auflageabschnitt (105) und Transportrahmen (120) oder Transportrahmenabschnitt (102)ein Widerlager (119) vorgesehen ist, bei dem es sich bevorzugt um einen Abschnitt des Transportrahmens (120) oder Transportrahmenabschnitts (102) handelt, oder das auf dem Transportrahmen (120) oder auf dem Transportrahmenabschnitt (102) anordbar ist, und/oder dass über das Arretierelement (103) im Wesentlichen vertikale Lasten oder Momente von der Last (300, 300') in den Transportrahmen (120) oder in den Transportrahmenabschnitt (102) eingeleitet werden.

4. Transport- und Sicherungssystem nach einem der Ansprüche 1 bis 3, **dadurch gekennzeichnet, dass** das Bolzenelement (101, 13) einen Gewindeabschnitt (106) zur Aufnahme eines Konterelements (107), bevorzugt einer Mutter, aufweist, und/oder ein Widerlager (102) für das Arretierelement (103) aufweist, bevorzugt ein Bolzenkopf, und/oder dass die Arretierkraft durch das Bolzenelement (101) erzeugbar ist, indem bevorzugt das Konterelement (107) auf dem Gewindeabschnitt (106) gegen den Transportrahmen (120) oder den Transportrahmenabschnitt (102) oder Widerlager (119) verspannbar ist.

5. Transport- und Sicherungssystem nach einem der Ansprüche 1 bis 4, **dadurch gekennzeichnet, dass** ein Distanzstück (109, 110) zum Aufbringen auf einen Auflageabschnitt (104, 105) vorgesehen ist, bevorzugt aufsteckbar oder aufschiebbar als Schwalbenschwanzverbindung.

6. Transport- und Sicherungssystem nach einem der Ansprüche 1 bis 5, **dadurch gekennzeichnet, dass** das Schwerlastsicherungselement (10, 100) einen Arretierkörper (178) aufweist, der in Wirkverbindung mit dem Transportrahmen (120) oder mit dem Transportrahmenabschnitt (102), bevorzugt über ein Widerlager (119), und der Last (300, 300') steht, wobei der Arretierkörper (178) bevorzugt in das Widerlager (119) einsetzbar ist, und/oder dass ein Widerlager (119) vorgesehen ist, dass eine Öffnung (182) aufweist, in die ein Arretiermittel (179), bevorzugt ein Gewindebolzen, einbringbar ist, der gegen eine Seitenwand (180) des Arretierkörpers (178) und/oder in eine Öffnung in der Seitenwand (180) des Arretierkörpers (178) bewegbar ist, so dass die Wirkverbindung herstellbar ist.

7. Transport- und Sicherungssystem nach einem der Ansprüche 1 bis 6, **dadurch gekennzeichnet, dass** das Sicherungselement (10, 100) ein Führungselement (181) aufweist, über das gewährleistet ist, dass die Last (300, 300') an der dafür vorgesehenen Stelle auf dem Transportrahmen (120) oder auf dem Transportrahmenabschnitt (102) anordbar ist, wobei bevorzugt das Führungselement (181) Bestandteil des Arretierkörpers (179) ist.

8. Transport- und Sicherungssystem nach einem der Ansprüche 1 bis 7, **dadurch gekennzeichnet, dass** das Arretierelement (103) einen Sicherungskörper (14) und ein Widerlagerelement (12) aufweist, wobei der Sicherungskörper (14) bevorzugt ein Verbindungselement (27) zum Herstellen einer Verbindung mit der Last (300, 300') aufweist, und/oder ein Passstück (28) aufweist, wobei das Passstück (28) und/oder das Verbindungselement (27) besonders bevorzugt gegenüber dem Sicherungskörper (14) bewegbar angeordnet sind.

9. Transport- und Sicherungssystem nach einem der Ansprüche 1 bis 8, **dadurch gekennzeichnet, dass** das Sicherungselement (10, 100) ein Verriegelungselement (11) aufweist, und dass das Verriegelungselement (11) geeignet ist, in einen Aufnahmeabschnitt (103') des Transportrahmens (120) oder des Transportrahmenabschnitts (102) einzugreifen und in Verbindung mit diesem eine haltende Verbindung herzustellen, wobei bevorzugt das Bolzenelement (103, 13) in das Verriegelungselement (11) einsteckbar ist oder das Bolzenelement (103, 13) am Verriegelungselement (11) angeordnet ist, und/oder dass das Verriegelungselement (11) einen Führungsabschnitt (29), und/oder einen Halteabschnitt (30) aufweist, auf dem ein Halteelement (31), bevorzugt in Form von wenigstens einem Vorsprung (32) angeordnet ist.

10. Transport- und Sicherungssystem nach Anspruch 8 oder 9, **dadurch gekennzeichnet, dass** das Widerlagerelement (12) gegen einen Abschnitt (15) des Sicherungskörpers (14) wirkend angeordnet ist und/oder das Verriegelungselement (11) gegenüberliegend zum Widerlagerelement (12) gegen einen weiteren Abschnitt (16) des Sicherungskörpers (14) wirkend angeordnet ist, wobei die Arretierkraft bevorzugt durch Zusammenpressen von Widerlagerelement (12) und Verriegelungselements (11) in Richtung des Sicherungskörpers (14) ausübbar ist.

11. Transport- und Sicherungssystem nach einem der Ansprüche 8 bis 10, **dadurch gekennzeichnet, dass** der Sicherungskörper (14) gegenüber dem Widerlagerelement (12) und/oder dem Verriegelungselement (11) im nicht arretierten Zustand verdrehbar und/oder verschiebbar ist, und/oder dass der Sicherungskörper (14) eine Durchstecköffnung (21) für einen Einsetzabschnitt (22) des Widerlagerelements (12) oder des Verriegelungselements (11) und/oder für das Bolzenelement (103, 13) aufweist, wobei bevorzugt ein Einsetzabschnitt (22) des Widerlagerelements (12) oder des Verriegelungselements (11) und die Durchstecköffnung (21) so korrespondierend ausgeführt sind, dass eine auf die Last (300, 300') wirkende horizontale Kraft von dem Sicherungselement (10, 100) in den Transportrahmen (120) oder in den Transportrahmenabschnitt (102) übertragbar ist und/oder die Durchstecköffnung (21) einen Halteabschnitt (25), besonders bevorzugt in Form wenigstens eines Vorsprungs (26), und das Widerlagerelement (12) oder das Verriegelungselement (11) einen korrespondierenden Halteabschnitt (23) besonders bevorzugt in Form wenigstens eines Vorsprungs (24), aufweisen, wobei die Halteabschnitte (23, 25) so ausgeführt sind, dass eine formschlüssige Verbindung herstellbar ist.

12. Transport- und Sicherungssystem nach einem der Ansprüche 1 bis 11, **dadurch gekennzeichnet, dass** der Aufnahmeabschnitt sich in wenigstens abschnittsweise entlang einer Seitenwand des Transportrahmenabschnitts erstreckt und ein Halteelement aufweist, dass geeignet ist, eine haltende Verbindung mit dem Sicherungselement bereitzustellen, wobei bevorzugt der Aufnahmeabschnitt schlitzartig ausgeführt ist, in der Oberseite des Transportrahmenabschnitts angeordnet ist, sich über einen wesentlichen Teil des Transportrahmenabschnitts erstreckt und/oder das Halteelement wenigstens ein Vorsprung ist, über den eine formschlüssige haltende Verbindung mit der Sicherungsvorrichtung herstellbar ist, und/oder dass ein Kontaktabschnitt vorgesehen ist, über den ein vertikal haltende Verbindung zwischen Transportrahmenabschnitt und Sicherungselement bereitstellbar ist.

13. Transport- und Sicherungssystem nach einem der Ansprüche 1 bis 12, **dadurch gekennzeichnet, dass** der Transportrahmen weist einen Außenrahmen (121) und Innentraversen (122) auf, die bevorzugt im Wesentlichen rechtwinklig in Bezug auf den Außenrahmen (121) innerhalb des Außenrahmens (121) angeordnet sind, wobei Innentraversen (122) Öffnungen (131) zur Aufnahme des Schwerlastsicherungselement aufweisen, und/oder dass wenigstens zwei Transportrahmenabschnitte vorgesehen sind, bevorzugt parallel zueinander angeordnet, die jeweils wenigstens einen Aufnahmeabschnitt aufweisen und die über ein Verbindungsmittel verbindbar sind, wobei bevorzugt auf einer Seite des Transportrahmenabschnitts eine Aufnahme) für das Verbindungsmittel vorgesehen ist und/oder es sich bei dem Verbindungsmittel um eine Spannschlossstange handelt.

14. Transport- und Sicherungssystem nach einem der Ansprüche 1 bis 13, **dadurch gekennzeichnet, dass** das Halteelement (106) des Transportrahmenabschnitts (102) und das Halteelement (31) des Verriegelungselements (11) des Schwerlastsicherungselement (10) so ausgeführt sind, dass eine haltende Verbindung zwischen Transportrahmenabschnitt (102) und Schwerlastsicherungselement (10) herstellbar ist, die geeignet ist, auf die Last (300) wirkende horizontale und/oder vertikale Kräfte und Momente auf die Transportoberfläche (410) zu übertragen.

## Claims

1. Transport and securing system suitable for transporting a heavy load (300), in particular a component of a wind turbine, on a transport surface (410) of a transport vehicle (400), in particular of a ship, having a transport element (120, 100, 102) in the form of a transport frame (120) or of a transport frame system (100) with at least one transport frame section (102), having a receiving section which is arranged on the transport frame (120) or on the transport frame section (102) and which serves for receiving a heavy-load securing element (10) for securing the load (300) on the transport frame (120) or on the transport frame section (102), and having at least one fastening means receptacle for receiving a fastening means for securing the transport frame (120) or the transport frame section (102) on a transport surface (410) and having a heavy-load securing element (10) for securing the load (300) on the transport frame (120) or on the transport frame section (102) with at least one bolt element (101, 13) which is operatively connected to the transport frame (120) or to the transport frame section (102), having at least one arresting element (103) which is arrangeable or arranged on the bolt element (101), wherein the arresting element (103) has a first bearing section (105), which in the mounted state is operatively connected to the transport frame (120) or to the transport frame section (102), and a second bearing section (104), which in the mounted state is operatively connected to a section (200, 320) of the load (300), wherein a force that retains the load (200, 300) on the transport frame (120) or on the transport frame section (102) can be transmitted via the arresting element (103) via the bearing sections (104, 105).

2. Transport and securing system according to Claim 1, **characterized in that** the operative connection of the bolt element (101, 13) to the transport frame (120) or to the transport frame section (102) can be produced via an opening (131, 103) in the transport frame (120) or in the transport frame section (102), into which opening the bolt element (101, 13) is insertable, or **in that** the bolt element (101, 13) is arranged on the transport frame (120) or on the transport frame section (102).

3. Transport and securing system according to Claim 1 or 2, **characterized in that**, between bearing section (105) and transport frame (120) or transport frame section (102), there is provided a counterbearing (119), which is preferably a section of the transport frame (120) or transport frame section (102) or which is arrangeable on the transport frame (120) or on the transport frame section (102), and/or **in that**, via the arresting element (103), substantially vertical loads or moments are introduced by the load (300, 300') into the transport frame (120) or into the transport frame section (102) .

4. Transport and securing system according to one of Claims 1 to 3, **characterized in that** the bolt element (101, 13) has a thread section (106) for receiving a lock element (107), preferably a nut, and/or has a counterbearing (102) for the arresting element (103), preferably a bolt head, and/or **in that** the arresting force can be generated by the bolt element (101) by virtue of preferably the lock element (107) on the thread section (106) being capable of being braced against the transport frame (120) or against the transport frame section (102) or counterbearing (119).

5. Transport and securing system according to one of Claims 1 to 4, **characterized in that** a spacer piece (109, 110) for applying to a bearing section (104, 105) is provided, preferably such that it can be plugged on or slid on as a dovetail connection.

6. Transport and securing system according to one of Claims 1 to 5, **characterized in that** the heavy-load securing element (10, 100) has an arresting body (178) which is operatively connected to the transport frame (120) or to the transport frame section (102), preferably via a counterbearing (119), and to the load (300, 300'), wherein the arresting body (178) is preferably insertable into the counterbearing (119), and/or **in that** a counterbearing (119) is provided which has an opening (182) into which an arresting means (179), preferably a threaded bolt, can be inserted, which arresting means is movable against a side wall (180) of the arresting body (178) and/or into an opening in the side wall (180) of the arresting body (178), such that the operative connection can be produced.

7. Transport and securing system according to one of Claims 1 to 6, **characterized in that** the securing element (10, 100) has a guide element (181) by means of which it is ensured that the load (300, 300) is arrangeable at the position provided for it on the transport frame (120) or on the transport frame section (102), wherein preferably, the guide element (181) is a constituent part of the arresting body (179).

8. Transport and securing system according to one of Claims 1 to 7, **characterized in that** the arresting element (103) has a securing body (14) and a counterbearing element (12), wherein the securing body (14) preferably has a connecting element (27) for producing a connection to the load (300, 300), and/or has a fitting piece (28), wherein the fitting piece (28) and/or the connecting element (27) are particularly preferably arranged so as to be movable relative to the securing body (14).

9. Transport and securing system according to one of Claims 1 to 8, **characterized in that** the securing element (10, 100) has a locking element (11), and **in that** the locking element (11) is suitable for engaging into a receiving section (103') of the transport frame (120) or of the transport frame section (102) and, in conjunction therewith, producing a retaining connection, wherein preferably, the bolt element (103, 13) is insertable into the locking element (11) or the bolt element (103, 13) is arranged on the locking element (11), and/or **in that** the locking element (11) has a guide section (29) and/or a retaining section (30) on which a retaining element (31), preferably in the form of at least one projection (32), is arranged.

10. Transport and securing system according to Claim 8 or 9, **characterized in that** the counterbearing element (12) is arranged so as to act against a section (15) of the securing body (14), and/or the locking element (11) is arranged opposite the counterbearing element (12) so as to act against a further section (16) of the securing body (14), wherein the arresting force can preferably be exerted by virtue of counterbearing element (12) and locking element (11) being pressed together in the direction of the securing body (14).

11. Transport and securing system according to one of Claims 8 to 10, **characterized in that** the securing body (14) is, in the non-arrested state, rotatable and/or displaceable relative to the counterbearing element (12) and/or the locking element (11), and/or **in that** the securing body (14) has a passage opening (21) for an insertion section (22) of the counterbearing element (12) or of the locking element (11) and/or for the bolt element (103, 13), wherein preferably, an insertion section (22) of the counterbearing element (12) or of the locking element (11) and the passage opening (21) are designed correspondingly such that a horizontal force acting on the load (300, 300') can be transmitted by the securing element (10, 100) into the transport frame (120) or into the transport frame section (102), and/or the passage opening (21) has a retaining section (25), particularly preferably in the form of at least one projection (26), and the counterbearing element (12) or the locking element (11) has a corresponding retaining section (23) particularly preferably in the form of at least one projection (24), wherein the retaining sections (23, 25) are designed such that a positively locking connection can be produced.

12. Transport and securing system according to one of Claims 1 to 11, **characterized in that** the receiving section extends at least in sections along a side wall of the transport frame section and has a retaining element which is suitable for providing a retaining connection to the securing element, wherein preferably, the receiving section is of slot-like form, is arranged in the top side of the transport frame section and extends over a major part of the transport frame section, and/or the retaining element is at least one projection by means of which a positively locking retaining connection to the securing device can be produced, and/or **in that** a contact section is provided by means of which a vertically retaining connection between transport frame section and securing element can be provided.

13. Transport and securing system according to one of Claims 1 to 12, **characterized in that** the transport frame has an outer frame (121) and inner crossmembers (122), which are preferably arranged substantially at right angles in relation to the outer frame (121) within the outer frame (121), wherein inner crossmembers (122) have openings (131) for receiving the heavy-load securing element, and/or **in that** at least two transport frame sections are provided, preferably arranged parallel to one another, which transport frame sections have in each case at least one receiving section and are connectable by means of a connecting means, wherein preferably, a receptacle for the connecting means is provided on one side of the transport frame section, and/or the connecting means is a turnbuckle rod.

14. Transport and securing system according to one of Claims 1 to 13, **characterized in that** the retaining element (106) of the transport frame section (102) and the retaining element (31) of the locking element (11) of the heavy-load securing element (10) are designed such that a retaining connection can be produced between transport frame section (102) and heavy-load securing element (10), which connection is suitable for transmitting horizontal and/or vertical forces and moments acting on the load (300) to the transport surface (410) .

## Revendications

1. Système de fixation et de transport, destiné à transporter une charge lourde (300), en particulier un composant d une éolienne, sur une surface de transport (410) d un véhicule de transport (400), en particulier d un navire, comprenant un élément de transport (120, 100, 102) se présentant sous la forme d un châssis de transport (120) ou d un système de châssis de transport (100) comportant au moins une partie de châssis de transport (102), une partie de réception disposée sur le châssis de transport (120) ou sur la partie de châssis de transport (102) et destinée à recevoir un élément de fixation de charge lourde (10) destiné à fixer la charge (300) sur le châssis de transport (120) ou sur la partie de châssis de transport (102), et au moins un logement de moyen de fixation destiné à recevoir un élément de fixation destiné à fixer le châssis de transport (120) ou la partie de châssis de transport (102) sur une surface de transport (410) et un élément de fixation de charge lourde (10) destiné à fixer la charge (300) sur le châssis de transport (120) ou sur la partie de châssis de transport (102) comportant au moins un élément formant boulon (101, 13), qui est relié fonctionnellement au châssis de transport (120) ou à la partie de châssis de transport (102), au moins un élément de verrouillage (103) qui est disposé ou peut être disposé sur l élément formant boulon (101), l élément de verrouillage (103) comportant une première partie de support (105) qui est reliée fonctionnellement, à l état monté, au châssis de transport (120) ou à la partie de châssis de transport (102) et une deuxième partie de support (104) qui est reliée fonctionnellement, à l état monté, à une partie (200, 320) de la charge (300), une force de maintien de la charge (200, 300) sur le châssis de transport (120) ou la partie de châssis de transport (102) pouvant être transmise par l élément de verrouillage (103) par le biais des parties de support (104, 105).

2. Système de fixation et transport selon la revendication 1, **caractérisé en ce que** la liaison fonctionnelle de l élément formant boulon (101, 13) au châssis de transport (120) ou à la partie de châssis de transport (102) peut être établie par le biais d une ouverture (131, 103), ménagée dans le châssis de transport (120) ou dans la partie de châssis de transport (102), dans laquelle l élément formant boulon (101, 13) peut être inséré, ou **en ce que** l élément formant boulon (101, 13) est disposé au niveau du châssis de transport (120) ou de la partie de châssis de transport (102).

3. Système de fixation et de transport selon la revendication 1 ou 2, **caractérisé en ce qu** une butée (119) est prévue entre la partie de support (105) et le châssis de transport (120) ou la partie de châssis de transport (102), laquelle butée est de préférence une partie du châssis de transport (120) ou de la partie de châssis de transport (102), ou peut être disposée sur le châssis de transport (120) ou sur la partie de châssis de transport (102), et/ou **en ce que** par le biais de l élément de verrouillage (103) des charges sensiblement verticales ou des couples sensiblement verticaux sont introduits de la charge (300 , 300) dans le châssis de transport (120) ou dans la partie de châssis de transport (102).

4. Système de fixation et de transport selon l une des revendications 1 à 3, **caractérisé en ce que** l élément formant boulon (101, 13) comporte une partie filetée (106) destinée à recevoir un élément homologue (107), de préférence un écrou, et/ou une butée (102) destinée à l élément de verrouillage (103), de préférence une tête de boulon, et/ou **en ce que** la force de verrouillage peut être produite par l élément formant boulon (101) de préférence par serrage de l élément homologue (107) sur la partie filetée (106) contre le châssis de transport (120) ou la partie de châssis de transport (102) ou la butée (119).

5. Système de fixation et de transport selon l une des revendications 1 à 4, **caractérisé en ce qu** il est prévu une pièce d espacement (109, 110) destinée à être appliquée sur une partie de support (104, 105), de préférence de manière à pouvoir être montée ou glissée comme une liaison en queue d aronde.

6. Système de fixation et de transport selon l une des revendications 1 à 5, **caractérisé en ce que** l élément de fixation de charge lourde (10, 100) comporte un corps de verrouillage (178) qui est relié fonctionnellement au châssis de transport (120) ou à la partie de châssis de transport (102), de préférence par le biais d une butée (119), et à la charge (300, 300), le corps de verrouillage (178) pouvant être inséré de préférence dans la butée (119), et/ou **en ce qu** une butée (119) est prévue qui comporte une ouverture (182) dans laquelle peut être introduit un moyen de verrouillage (179), de préférence un boulon fileté, qui peut être déplacé contre une paroi latérale (180) du corps de verrouillage (178) et/ou dans une ouverture ménagée dans la paroi latérale (180) du corps de verrouillage (178) de façon à établir la liaison fonctionnelle.

7. Système de fixation et de transport selon l une des revendications 1 à 6, **caractérisé en ce que** l élément de fixation (10, 100) comporte un élément de guidage (181) permettant de garantir que la charge (300, 300) peut être disposée à l emplacement dédié sur le châssis de transport (120) ou sur la partie de châssis de transport (102), l élément de guidage (181) faisant de préférence partie du corps de verrouillage (179) .

8. Système de fixation et de transport selon l une des revendications 1 à 7, **caractérisé en ce que** l élément de verrouillage (103) comporte un corps de fixation (14) et un élément de butée (12), le corps de fixation (14) comportant de préférence un élément de liaison (27) destiné à établir une liaison avec la charge (300, 300), et/ou une pièce d ajustage (28), la pièce d ajustage (28) et/ou l élément de liaison (27) étant disposés de manière mobile de façon particulièrement préférée par rapport au corps de fixation (14).

9. Système de fixation et de transport selon l une des revendications 1 à 8, **caractérisé en ce que** l élément de fixation (10, 100) comporte un élément de verrouillage (11), et **en ce que** l élément de verrouillage (11) est adapté pour s engager dans une partie de réception (103) du châssis de transport (120) ou de la partie de châssis de transport (102) et pour établir une liaison avec cette liaison de retenue, l élément formant boulon (103, 13) pouvant être de préférence introduit dans l élément de verrouillage (11) ou l élément formant boulon (103, 13) pouvant être disposé au niveau de l élément de verrouillage (11), et/ou **en ce que** l élément de verrouillage (11) comporte une partie de guidage (29), et/ou une partie de retenue (30) sur laquelle est disposé un élément de retenue (31), se présentant de préférence sous la forme d au moins une saillie (32).

10. Système de fixation et de transport selon la revendication 8 ou 9, **caractérisé en ce que** l élément de butée (12) est disposé de manière à agir contre une partie (15) du corps de fixation (14) et/ou l élément de verrouillage (11) est disposé à l opposé de l élément de butée (12) de manière à agir contre une autre partie (16) du corps de fixation (14), la force de verrouillage pouvant être exercée de préférence par compression de l élément de butée (12) et de l élément de verrouillage (11) en direction du corps de fixation (14) .

11. Système de fixation et de transport selon l une des revendications 8 à 10, **caractérisé en ce que** le corps de fixation (14) peut tourner et/ou coulisser, dans l état déverrouillé, par rapport à l élément de butée (12) et/ou à l élément de verrouillage (11) et/ou en ce que le corps de fixation (14) comporte une ouverture de passage (21) destinée à une partie d insertion (22) de l élément de butée (12) ou l élément de verrouillage (11) et/ou à l élément formant boulon (103, 13), une partie d insertion (22) de l élément de butée (12) ou de l élément de verrouillage (11) et l ouverture de passage (21) étant de préférence adaptées pour correspondre de sorte qu une force horizontale agissant sur la charge (300, 300) peut être transmise de l élément de fixation (10, 100) jusque dans le châssis de transport (120) ou dans la partie de châssis de transport (102) et/ou l ouverture de passage (21) comportant une partie de retenue (25), se présentant de manière particulièrement préférée sous la forme d au moins une saillie (26), et l élément de butée (12) ou l élément de verrouillage (11) comportant une partie de retenue correspondante (23) se présentant de manière particulièrement préférée sous la forme d au moins une saillie (24), les parties de retenue (23, 25) étant conçues de façon à établir une liaison par complémentarité de formes.

12. Système de fixation et de transport selon l une des revendications 1 à 11, **caractérisé en ce que** la partie de réception s étend au moins partiellement le long d une paroi latérale de la partie de châssis de transport et comporte un élément de retenue qui est adapté pour établir une liaison de retenue avec l élément de fixation, la partie de réception étant de préférence réalisée sous la forme d une fente, étant disposée dans le côté supérieur de la partie de châssis de transport, s étendant sur une grande partie de la partie de châssis de transport et/ou l élément de retenue étant au moins une saillie qui permet d établir une liaison de retenue par complémentarité de formes avec le dispositif de fixation, et/ou **en ce qu** il est prévue une partie de contact permettant d établir une liaison de retenue verticale entre la partie de châssis de transport et l élément de fixation.

13. Système de fixation et de transport selon l une des revendications 1 à 12, **caractérisé en ce que** le châssis de transport comporte un cadre extérieur (121) et des traverses intérieures (122), qui sont disposées de préférence sensiblement perpendiculaires par rapport au cadre extérieur (121) à l intérieur du cadre extérieur (121), les traverses intérieures (122) comportant des ouvertures (131) destinées à recevoir l élément de fixation de charge lourde, et/ou **en ce qu** il est prévu au moins deux parties de châssis de transport, disposées de préférence parallèlement entre elles, qui comportent chacune au moins une partie de réception et qui peuvent être reliées par le biais d un moyen de liaison, un logement destiné au moyen de liaison étant prévu de préférence sur un côté de la partie de châssis de transport et/ou le moyen de liaison étant une barre de tension.

14. Système de fixation et de transport selon l une des revendications 1 à 13, **caractérisé en ce que** l élément de retenue (106) de la partie de châssis de transport (102) et l élément de retenue (31) de l élément de verrouillage (11) de l élément de fixation de charge lourde (10) sont conçus de manière à établir entre la partie de châssis de transport (102) et l élément de verrouillage de charge lourde (10) une liaison de retenue qui est adaptée pour transmettre sur la surface de transport (410) des forces horizontales et/ou verticales et des couples horizontaux et/ou verticaux agissant sur la charge (300).
